(19) Europäisches Patentamt
European Patent Office
Office européen des brevets

(11) **EP 3 056 597 A1**

(12) **EUROPEAN PATENT APPLICATION**
published in accordance with Art. 153(4) EPC

(43) Date of publication:
**17.08.2016 Bulletin 2016/33**

(51) Int Cl.:
*D04H 1/559* (2012.01)    *D04H 1/4374* (2012.01)
*D04H 1/728* (2012.01)    *B01D 39/08* (2006.01)

(21) Application number: **14851459.9**

(22) Date of filing: **26.02.2014**

(86) International application number:
**PCT/KR2014/001580**

(87) International publication number:
**WO 2015/053444 (16.04.2015 Gazette 2015/15)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(30) Priority: 07.10.2013  KR 20130119495
07.10.2013  KR 20130119496
07.10.2013  KR 20130119497
07.10.2013  KR 20130119498
07.10.2013  KR 20130119499
07.10.2013  KR 20130119500
07.10.2013  KR 20130119501
07.10.2013  KR 20130119502
07.10.2013  KR 20130119503
07.10.2013  KR 20130119504
07.10.2013  KR 20130119505

(71) Applicant: **Finetex Ene, Inc.**
**Seoul 137-819 (KR)**

(72) Inventor: **PARK, Jong-Chul**
**Seoul 140-774 (KR)**

(74) Representative: **v. Bezold & Partner Patentanwälte
- PartG mbB**
**Akademiestraße 7**
**80799 München (DE)**

(54) **FILTER COMPRISING NANOFIBER BETWEEN SUBSTRATES AND METHOD FOR MANUFACTURING SAME**

(57)    The present invention relates to a filter including nanofiber between substrates, and the technical feature is after laminating forming nanofiber non-woven fabric by electrospinning polymer spinning solution on a first substrate, adhereing a second substrate on laminated nanofiber non-woven fabric, and forming a filter including nanofiber.

FIG.9

2nd cellulose substrate
Polyvinylidene fluoride nanofiber non-woven fabric
1st cellulose substrate

## Description

### Technical Field

The present invention relates to a filter comprising nanofiber between substrates and method for manufacturing the same, and more particularly, to a filter comprising nanofiber between substrates produced by electrospinning polymer spinning solution on a first substrate, laminating forming nanofiber non-woven fabric, and adhering a second substrate on the nanofiber non-woven fabric and a method for manufacturing method same.

### Background Art

Generally, a filter is a filtering medium which filters out foreign substances in fluid, and comprises a liquid filter and an air filter. An air filter is used for prevention of defective high-tech products along with high-tech industry development. An air filter eliminates biologically harmful things such as dust in air, particles, bio particles such as virus and mold, bacteria, etc. An air filter is applied in various fields such as production of semiconductor, assembly of computing device, tape manufacture, seal printing, hospital, medicine production, food processing plant, food and agriculture field, workplace with a lot of dust, and thermoelectric power plant. Gas turbine used in thermal power plant intakes purified air from outside, compresses it, injects compressed air with fuel to combustion burner, mixes them, combusts mixed air and fuel, obtains high temperature and high pressure combustion gas, injects the high temperature and high pressure combustion gas to vane of turbine, and attains rotatory power. Since the gas turbine comprises very precise components, periodic planned preventive maintenance is performed, and wherein the air filter is used for pretreatment to purify air in the atmosphere which inflows to a compressor.

Here, when adopts air for combustion intake to gas turbine, an air filter stop from permeating foreign substances in atmosphere such as dust into a filter medium, and provides purified air. However, particles with larger particle size form Filter Cake on the surface of the filter medium. Also, fine particles go through the first surface layer, gradually accumulate in the filter medium, and block gas hole of the filter medium. Eventually, when particles accumulate on the surface of filter medium, it increases pressure loss of a filter, and decline sustainability of a filter.

Meanwhile, conventional air filter provides static electricity to fiber-assembly comprising a filter medium, and measures efficiency according to the principle collecting by electrostatic force. However, the Europe air filter standard classification EN779 revised recently to eliminate efficiency of filter by static electricity effect in 2012 and revealed that conventional filter actual efficiency decreases 20% or more.

In order to solve the problems stated above, various methods which apply to filter by producing nanosize fiber have been developed and used. In nanofilter realized nanofiber to filter, in comparison with the conventional filter medium having large diameter, specific-surface area is very large, flexibility of surface functionality is good, gas hole size has nano level, and harmful fine particles are effectively eliminated. However, realization of filter using nanofiber has problems such as increasing production cost, difficulty in adjusting various conditions for production, difficulty in mass-production, and filter using nanofiber could not be produced and distributed in relatively low unit cost. Also, since conventional technology of spinning nanofiber is limited to small scale production line concentrating on laboratory, there is no case of introduction of spinning-section as unit concept.

### Disclosure

### Technical Problem

The present invention is contrived to solve the problems stated above, the present invention relates to a filter and its manufacturing method produced by electrospinning polymer spinning solution on a first substrate, producing laminating formed nanofiber non-woven fabric, and adhering a second substrate on nanofiber non-woven fabric. The present invention provides a filter and its manufacturing method that can have less pressure lose than conventional filter, increase filtering efficiency, and extend filter sustainability.

Moreover, the present invention is directed to providing a filter produced by introducing unit concept in electrospinning, which can mass-produce, and produces filter with uniformed quality.

### Technical Solution

According to an exemplary embodiment of the present invention, a filter comprising nanofiber between substrates comprises a first cellulose substrate, polyvinylidene fluoride nanofiber non-woven fabric laminating formed on the first cellulose substrate by electrospinning, and a second cellulose substrate laminated on the polyvinylidene fluoride nanofiber non-woven fabric, and features thermosetting of the first and second cellulose substrate and the polyvinylidene fluoride nanofiber non-woven fabric.

According to another exemplary embodiment of the present invention, the filter comprising nanofiber between substrates provides a filter that the polyvinylidene fluoride nanofiber non-woven fabric includes a first polyvinylidene fluoride nanofiber non-woven fabric layer with fiber diameter of 150 to 300nm and a second polyvinylidene fluoride nanofiber non-woven fabric layer with fiber diameter of 100 to 150nm.

According to yet another exemplary embodiment of the present invention, a hot melt electrospinning layer is located between the first cellulose substrate and the polyvinylidene fluoride nanofiber non-woven fabric and between the second cellulose substrate and the polyvinylidene fluoride nanofiber non-woven fabric. Also, the polyvinylidene fluoride nanofiber non-woven fabric may be polyvinylidene fluoride hot melt nanofiber non-woven fabric formed by electrospinning mixed solution of polyvinylidene fluoride and hot melt. Here, the hot melt includes polyvinylidene fluoride group hot melt, and the first and the second cellulose substrates include cellulose and polyethylene terephthalate. Moreover, the first and the second cellulose substrates having composition ratio of the cellulose is 70 to 90 weight%, and composition ratio of the polyethylene terephthalate is 10 to 30 weight%. Also, the first and the second cellulose substrates feature flame resistance coating.

According to another exemplary embodiment of the present invention, the filter comprising nanofiber between substrates comprises a first bicomponent substrate, polyvinylidene fluoride - hot melt nanofiber non-woven fabric laminating formed by electrospinning mixed solution of polyvinylidene fluoride and hot melt on one side of the first bicomponent substrate, and a second bicomponent substrate laminated on the polyvinylidene fluoride - hot melt nanofiber non-woven fabric, and comprises a filter comprising nanofiber between substrates that the first and the second bicomponent substrates and the polyvinylidene fluoride - hot melt nanofiber non-woven fabric are thermosetted each other.

According to yet another exemplary embodiment of the present invention, the filter comprising nanofiber between substrates provides a first polyethylene terephthalate substrate, high melting point and low melting point polyvinylidene fluoride nanofiber non-woven fabric laminated by electrospinning mixed solution of high melting point polyvinylidene fluoride and low melting point polyvinylidene fluoride on the first polyethylene terephthalate substrate, and a second polyethylene terephthalate substrate laminated on the high melting point and low melting point polyvinylidene fluoride nanofiber non-woven fabric, and provides a filter comprising nanofiber between substrates that the first and the second polyethylene terephthalate substrates and the high melting point and the low melting point polyvinylidene fluoride nanofiber non-woven fabric are thermosetted each other.

According to another exemplary embodiment of the present invention, the filter comprising nanofiber between substrates provides a first substrate, polyurethane and polyvinylidene fluoride mixed nanofiber non-woven fabric laminated by electrospinning mixed solution of polyvinylidene fluoride and polyurethane on the first substrate, and a second substrate laminated on the polyurethane and polyvinylidene fluoride mixed nanofiber non-woven fabric and provides a filter comprising nanofiber between substrates that the first and the second substrates and the polyurethane and polyvinylidene fluoride mixed nanofiber non-woven fabric are thermosetted each other.

According to yet another exemplary embodiment of the present invention, the filter comprising nanofiber between substrates provides a first polyethylene terephthalate substrate, a first bicomponent substrate laminated on the first polyethylene terephthalate substrate, polyvinylidene fluoride nanofiber non-woven fabric laminated by electrospinning on the first bicomponent substrate, a second bicomponent substrate laminated on the polyvinylidene fluoride nanofiber non-woven fabric, and a second polyethylene terephthalate substrate laminated on the second bicomponent substrate, and provides a filter comprising nanofiber between substrates that the first and the second bicomponent substrates and the polyvinylidene fluoride nanofiber non-woven fabric are thermosetted each other.

According to another exemplary embodiment of the present invention, the filter comprising nanofiber between substrates provides a first polyethylene terephthalate substrate, a first bicomponent substrate laminated on the first polyethylene terephthalate substrate, high melting point and low melting point polyvinylidene fluoride nanofiber non-woven fabric laminated by electrospinning mixed solution of high melting point polyvinylidene fluoride and low melting point polyvinylidene fluoride on the first bicomponent substrate, a second bicomponent substrate laminated on the high melting point and low melting point polyvinylidene fluoride nanofiber non-woven fabric, and a second polyethylene terephthalate substrate laminated on the second bicomponent substrate and provides a filter comprising nanofiber between substrates that the first and second polyethylene terephthalate substrates, the first and the second bicomponent substrates, and the high melting point and low melting point polyvinylidene fluoride nanofiber non-woven fabric are thermosetted each other.

According to yet another exemplary embodiment of the present invention, the filter comprising nanofiber between substrates provides a first polyethylene terephthalate substrate, a first bicomponent substrate laminated on the first polyethylene terephthalate substate, nylon nanofiber non-woven fabric laminating formed by electrospinning on the first bicomponent substrate, a second bicomponent substrate laminated on the nylon nanofiber non-woven fabric, and a second polyethylene terephthalate substrate laminated on the second bicomponent substrate, and provides a filter comprising nanofiber between substrates that the first and the second polyethylene terephthalate substrates, the first and the second bicomponent substrates, and the nylon nanofiber non-woven fabric are thermosetted each other.

According to another exemplary embodiment of the present invention, the filter comprising nanofiber between substrates provides a filter that includes a first bicomponent substrate, a second bicomponent substrate laminated on the first bicomponent substate, polyvinylidene fluoride nanofiber non-woven fabric laminating formed by electrospinning on the second bicomponent substrate, a third bicomponent substrate laminated on the polyvinylidene fluoride nanofiber non-woven fabric, and a fourth bicomponent substrate laminated on the third bicomponent substrate.

According to yet another exemplary embodiment of the present invention, the filter comprising nanofiber between substrates provides a first substrate, a first polyvinylidene fluoride nanofiber non-woven fabric with fiber diameter of 150 to 250nm laminated by electrospinning on the first substrate, a second polyvinylidene fluoride nanofiber non-woven fabric with fiber diameter of 100 to 150nm laminated by electrospinning on the first polyvinylidene fluoride nanofiber non-woven fabric, a third polyvinylidene fluoride nanofiber non-woven fabric with fiber diameter of 150 to 250nm laminated by electrospinning on the second polyvinylidene fluoride nanofiber non-woven fabric, and a second substrate laminated on the third polyvinylidene fluoride nanofiber non-woven fabric, and provides a filter comprising nanofiber between substrates that the first, the second, and the third polyvinylidene fluoride nanofiber non-woven fabric and the first and the second substrates are thermosetted each other.

According to another exemplary embodiment of the present invention, the filter comprising nanofiber between substrates provides a first substrate, a first nylon nanofiber non-woven fabric with fiber diameter of 100 to 150nm laminating formed by electrospinning on the first substrate, a polyvinylidene fluoride nanofiber non-woven fabric with fiber diameter of 80 to 150nm laminated by electrospinning on the first nylon nanofiber non-woven fabric, a second nylon nanofiber non-woven fabric with fiber diameter of 100 to 150nm laminating formed by electrospinning on the polyvinylidene fluoride nanofiber non-woven fabric, and a second substrate laminated on the second nylon nanofiber non-woven fabric, and provides a filter comprising nanofiber between substrates that the first and the second substrates, and the first and the second nylon nanofiber non-woven fabric and polyvinylidene fluoride nanofiber non-woven fabric are thermosetted each other.

According to yet another exemplary embodiment of the present invention, the filter comprising nanofiber between substrates provides a first substrate, a first polyurethane nanofiber non-woven fabric laminating formed by electrospinning polyurethane solution on the first substrate in a first unit, polyvinylidene fluoride nanofiber non-woven fabric laminated by electrospinning polyvinylidene fluoride solution on the first polyurethane nanofiber non-woven fabric in a second unit, a second polyurethane nanofiber non-woven fabric laminated by electrospinning polyurethane solution on the polyvinylidene fluoride nanofiber non-woven fabric in a third unit, and a second substrate laminated on the second polyurethane nanofiber non-woven fabric, and provides a filter comprising nanofiber between substrates that the first and the second substrates, the first and the second polyurethane nanofiber non-woven fabric and the polyvinylidene fluoride nanofiber non-woven fabric are thermosetted each other.

According to another exemplary embodiment of the present invention, the filter comprising nanofiber between substrates provides a first substrate, a first low melting point polyvinylidene fluoride nanofiber non-woven fabric laminated by electrospinning on the first substrate in a first unit, high melting point polyvinylidene fluoride nanofiber non-woven fabric laminated by electrospinning on the first low melting point polyvinylidene fluoride nanofiber non-woven fabric in a second unit, a second low melting point polyvinylidene fluoride nanofiber non-woven fabric laminated by electrospinning on the high melting point polyvinylidene fluoride nanofiber non-woven fabric in a third unit, and a second substrate laminated on the second low melting point polyvinylidene fluoride nanofiber non-woven fabric, and provides a filter comprising nanofiber between substrates that the first and the second substrates, the first and the second low melting point polyvinylidene fluoride nanofiber non-woven fabric and the high melting point polyvinylidene fluoride nanofiber non-woven fabric are thermosetted each other.

According to yet another exemplary embodiment of the present invention, by the electrospinning apparatus comprises two or more units, supply device is independently connected and installed in nozzle of nozzle block located in each unit, a laminating device for bonding other fabrics is provided, and spinning polymer solution is spinned on substrate located in collector of each unit, a method for manufacturing filter comprising nanofiber between substrates comprises a step of injecting spinning solution which dissolved polyvinylidene fluoride in solvent to a supply device of each unit of the electrospinning apparatus, a step of laminating-forming polyvinylidene fluoride nanofiber non-woven fabric by consecutively electrospinning the spinning solution on a first cellulose substrate in each of the unit, a step of adhering a second cellulose substrate on polyvinylidene fluoride nanofiber non-woven fabric laminated on the first cellulose substrate in a laminating device located in the rear-end of the electrospinning apparatus, and a step of thermosetting the first cellulose substrate, the polyvinylidene fluoride nanofiber non-woven fabric, and the second cellulose substrate.

According to another exemplary embodiment of the present invention, by the electrospinning apparatus comprises two or more units, supply device is independently connected and installed in nozzle of nozzle block located in each unit, a laminating device for bonding other fabrics is provided, and spinning polymer solution is spinned on substrate located in collector of each unit, a method for manufacturing filter comprising nanofiber between substrates comprises a step of injecting spinning solution which dissolved polyvinylidene fluoride and hot melt in solvent to a supply device of each unit of the electrospinning apparatus, a step of laminating-forming polyvinylidene fluoride - hot melt nanofiber non-woven fabric by consecutively electrospinning the spinning solution on a first bicomponent substrate in each of the unit, a step of adhering a second bicomponent substrate on polyvinylidene fluoride - hot melt nanofiber non-woven fabric laminated on the first bicomponent substrate in a laminating device located in the rear-end of the electrospinning apparatus, and a step of thermosetting the first bicomponent substrate, the polyvinylidene fluoride - hot melt nanofiber non-woven fabric, and the second bicomponent substrate.

According to yet another exemplary embodiment of the present invention, by the electrospinning apparatus comprises two or more units, supply device is independently connected and installed in nozzle of nozzle block located in each unit, a laminating device for bonding other fabrics is provided, and spinning polymer solution is spinned on substrate located in collector of each unit, a method for manufacturing filter comprising nanofiber between substrates comprises a step of injecting spinning solution which dissolved high melting point polyvinylidene fluoride and low melting point polyvinylidene fluoride in solvent to a supply device of each unit of the electrospinning apparatus, a step of laminating-forming high melting point and low melting point polyvinylidene fluoride nanofiber non-woven fabric by consecutively electrospinning the spinning solution on a first polyethylene terephthalate substrate in each of the unit, a step of adhering a second polyethylene terephthalate substrate on high melting point and low melting point polyvinylidene fluoride nanofiber non-woven fabric laminated on the first polyethylene terephthalate substrate in a laminating device located in the rear-end of the electrospinning apparatus, and a step of thermosetting the first polyethylene terephthalte substrate, the high melting point and low melting point polyvinylidene fluoride nanofiber non-woven fabric, and the second polyethylene terephthalte substrate.

According to another exemplary embodiment of the present invention, by the electrospinning apparatus comprises two or more units, supply device is independently connected and installed in nozzle of nozzle block located in each unit, a laminating device for bonding other fabrics is provided, and spinning polymer solution is spinned on substrate located in collector of each unit, a method for manufacturing filter comprising nanofiber between substrates comprises a step of injecting spinning solution which dissolved polyurethane and polyvinylidene fluoride in solvent to a supply device of each unit of the electrospinning apparatus, a step of laminating-forming polyurethane and polyvinylidene fluoride nanofiber non-woven fabric by electrospinning the spinning solution on a first substrate in each of the unit, a step of adhering upper side of a second substrate laminated on the polyurethane and polyvinylidene fluoride nanofiber non-woven fabric in a laminating device located in the rear-end of the electrospinning apparatus, and a step of thermosetting the first substrate, the polyurethane and polyvinylidene fluoride nanofiber non-woven fabric, and the second substrate.

According to yet another exemplary embodiment of the present invention, by the electrospinning apparatus comprises two or more units, supply device is independently connected and installed in nozzle of nozzle block located in each unit, a laminating device for bonding other fabrics is provided, and spinning polymer solution is spinned on substrate located in collector of each unit, a method for manufacturing filter comprising nanofiber between substrates comprises a step of injecting spinning solution which dissolved polyvinylidene fluoride in solvent to a supply device of each unit of the electrospinning apparatus, a step of laminating-forming polyvinylidene fluoride nanofiber non-woven fabric by electrospinning the spinning solution on a first bicomponent substrate laminated on a first polyethylene terephthalate substrate in each of the unit, a step of adhering upper side of a second bicomponent substrate laminated on a second polyethylene terephthalate substrate on the polyvinylidene fluoride nanofiber non-woven fabric in a laminating device located in the rear-end of the electrospinning apparatus, and a step of thermosetting the polyvinylidene fluoride nanofiber non-woven fabric, the first and the second bicomponent substrates, and the first and the second polyethylene terephthalate substrates.

According to another exemplary embodiment of the present invention, by the electrospinning apparatus comprises two or more units, supply device is independently connected and installed in nozzle of nozzle block located in each unit, a laminating device for bonding other fabrics is provided, and spinning polymer solution is spinned on substrate located in collector of each unit, a method for manufacturing filter comprising nanofiber between substrates comprises a step of injecting spinning solution which dissolved high melting point polyvinylidene fluoride and low melting point polyvinylidene fluoride in solvent to a supply device of each unit of the electrospinning apparatus, a step of laminating-forming high melting point and low melting point polyvinylidene fluoride nanofiber non-woven fabric by electrospinning the spinning solution on a first bicomponent substrate laminated on a first polyethylene terephthalate substrate in each of the unit, a step of adhering upper side of a second bicomponent substrate laminated on a second polyethylene terephthalate substrate on the high melting point and low melting point polyvinylidene fluoride nanofiber non-woven fabric in a laminating device located in the rear-end of the electrospinning apparatus, and a step of thermosetting the high melting point and low melting point polyvinylidene fluoride nanofiber non-woven fabric, the first and the second bicomponent substrates, and the first and the second polyethylene terephthalate substrates.

According to yet another exemplary embodiment of the present invention, by the electrospinning apparatus comprises two or more units, supply device is independently connected and installed in nozzle of nozzle block located in each unit, a laminating device for bonding other fabrics is provided, and spinning polymer solution is spinned on substrate located in collector of each unit, a method for manufacturing filter comprising nanofiber between substrates comprises a step of injecting spinning solution which dissolved nylon in solvent to a supply device of each unit of the electrospinning apparatus, a step of laminating-forming nylon nanofiber non-woven fabric by electrospinning the spinning solution on a first bicomponent substrate laminated on a first polyethylene terephthalate substrate in each of the unit, a step of adhering upper side of a second bicomponent substrate laminated on a second polyethylene terephthalate substrate on the nylon nanofiber non-woven fabric in a laminating device located in the rear-end of the electrospinning apparatus, and a step of thermosetting the nylon nanofiber non-woven fabric, the first and the second bicomponent substrates, and the first and the second polyethylene terephthalate substrates.

According to another exemplary embodiment of the present invention, by the electrospinning apparatus comprises two or more units, supply device is independently connected and installed in nozzle of nozzle block located in each unit, a laminating device for bonding other fabrics is provided, and spinning polymer solution is spinned on substrate located in collector of each unit, a method for manufacturing filter comprising nanofiber between substrates comprises a step of injecting spinning solution which dissolved polyvinylidene fluoride in solvent to a supply device of each unit of the electrospinning apparatus, a step of laminating-forming polyvinylidene fluoride nanofiber non-woven fabric by electrospinning the spinning solution on a second bicomponent substrate laminated on a first bicomponent substrate in each of the unit, a step of adhering upper side of a third bicomponent substrate laminated on a fourth bicomponent substrate on the polyvinylidene fluoride nanofiber non-woven fabric in a laminating device located in the rear-end of the electrospinning apparatus, and a step of thermosetting the polyvinylidene fluoride nanofiber non-woven fabric, the first, the second, the third, and the fourth bicomponent substrates.

According to yet another exemplary embodiment of the present invention, by the electrospinning apparatus comprises two or more units, supply device is independently connected and installed in nozzle of nozzle block located in each unit, a laminating device for bonding other fabrics is provided, and spinning polymer solution is spinned on substrate located in collector of each unit, a method for manufacturing filter comprising nanofiber between substrates comprises a step of injecting spinning solution which dissolved polyvinylidene fluoride in solvent to a supply device of each unit of the electrospinning apparatus, a step of laminating-forming a first polyvinylidene fluoride nanofiber non-woven fabric layer with fiber diameter of 150 to 250nm on a first substrate in a first unit of the electrospinning apparatus, a step of laminating-forming a second polyvinylidene fluoride nanofiber non-woven fabric layer with fiber diameter of 100 to 150nm on the first polyvinylidene fluoride nanofiber non-woven fabric layer in a second unit of the electrospinning apparatus, a step of laminating-forming a third polyvinylidene fluoride nanofiber non-woven fabric layer with fiber diameter of 150 to 250nm on the second polyvinylidene fluoride nanofiber non-woven fabric layer in a third unit of the electrospinning apparatus, a step of adhering a second substrate on the third polyvinylidene fluoride nanofiber non-woven fabric in a laminating device located in the rear-end of the electrospinning apparatus, and a step of thermosetting the first substrate, the first, the second, and the third polyvinylidene fluoride nanofiber non-woven fabric, and the second substrate.

According to another exemplary embodiment of the present invention, by the electrospinning apparatus comprises two or more units, supply device is independently connected and installed in nozzle of nozzle block located in each unit, a laminating device for bonding other fabrics is provided, and spinning polymer solution is spinned on substrate located in collector of each unit, a method for manufacturing filter comprising nanofiber between substrates comprises a step of injecting spinning solution which dissolved nylon in solvent to a first and a third units of the electrospinning apparatus and injecting spinning solution which dissolved polyvinylidene fluoride in solvent to a supply device of a second unit of the electrospinning apparatus, a step of laminating-forming a first nylon nanofiber non-woven fabric layer with fiber diameter of 100 to 150nm on a first substrate in a first unit of the electrospinning apparatus, a step of laminating-forming polyvinylidene fluoride nanofiber non-woven fabric layer with fiber diameter of 80 to 150nm on the first nylon nanofiber non-woven fabric layer in a second unit of the electrospinning apparatus, a step of laminating-forming a second nylon nanofiber non-woven fabric layer with fiber diameter of 100 to 150nm on the polyvinylidene fluoride nanofiber non-woven fabric layer in a third unit of the electrospinning apparatus, a step of adhering a second substrate on the second nylon nanofiber non-woven fabric in a laminating device located in the rear-end of the electrospinning apparatus, and a step of thermosetting the first substrate, the first nylon nanofiber non-woven fabric, the second, the polyvinylidene fluoride nanofiber non-woven fabric, the second nylon nanofiber non-woven fabric, and the second substrate.

According to yet another exemplary embodiment of the present invention, by the electrospinning apparatus comprises two or more units, supply device is independently connected and installed in nozzle of nozzle block located in each unit, a laminating device for bonding other fabrics is provided, and spinning polymer solution is spinned on substrate located in collector of each unit, a method for manufacturing filter comprising nanofiber between substrates comprises a step of injecting spinning solution which dissolved polyurethane in solvent to a first and a third units of the electrospinning apparatus, a step of injecting spinning solution which dissolved polyvinylidene fluoride in solvent to a supply device of a second unit of the electrospinning apparatus, a step of laminating-forming a first polyurethane nanofiber non-woven fabric layer on a first substrate in a first unit of the electrospinning apparatus, a step of laminating-forming polyvinylidene fluoride nanofiber non-woven fabric on the first polyurethane nanofiber non-woven fabric layer in a second unit of the electrospinning apparatus, a step of laminating-forming a second polyurethane nanofiber non-woven fabric layer on the polyvinylidene fluoride nanofiber non-woven fabric layer in a third unit of the electrospinning apparatus, a step of adhering upper side of a second substrate on the second polyurethane nanofiber non-woven fabric in a laminating device located in the rear-end of the electrospinning apparatus, and a step of thermosetting the first substrate, the first polyurethane nanofiber non-woven fabric, the polyvinylidene fluoride nanofiber non-woven fabric, the second polyurethane nanofiber non-woven fabric, and the second substrate.

According to another exemplary embodiment of the present invention, by the electrospinning apparatus comprises two or more units, supply device is independently connected and installed in nozzle of nozzle block located in each unit, a laminating device for bonding other fabrics is provided, and spinning polymer solution is spinned on substrate located in collector of each unit, a method for manufacturing filter comprising nanofiber between substrates comprises a step of injecting spinning solution which dissolved low melting point polyvinylidene fluoride in solvent to a first and a third units of the electrospinning apparatus and injecting spinning solution which dissolved high melting point polyvinylidene fluoride in solvent to a supply device of a second unit of the electrospinning apparatus, a step of laminating-forming a first low melting point polyvinylidene fluoride nanofiber non-woven fabric layer with fiber diameter of 150 to 300nm on a first substrate in a first unit of the electrospinning apparatus, a step of laminating-forming high melting point polyvinylidene fluoride nanofiber non-woven fabric layer with fiber diameter of 100 to 150nm on the first low melting point polyvinylidene fluoride nanofiber non-woven fabric layer in a second unit of the electrospinning apparatus, a step of laminating-forming a second low melting point polyvinylidene fluoride nanofiber non-woven fabric layer with fiber diameter of 150 to 300nm on the high melting point polyvinylidene fluoride nanofiber non-woven fabric layer in a third unit of the electrospinning apparatus, a step of adhering a second substrate on the second low melting point polyvinylidene fluoride nanofiber non-woven fabric in a laminating device located in the rear-end of the electrospinning apparatus, and a step of thermosetting the first substrate, the first low melting point polyvinylidene fluoride nanofiber non-woven fabric, the high melting point polyvinylidene fluoride nanofiber non-woven fabric, the second low melting point polyvinylidene fluoride nanofiber non-woven fabric, and the second substrate.

## Advantageous Effects

The filter according to the exemplary embodiment of the present invention by laminating forming nanofiber non-woven fabric on a filter substrate, compared to conventional filter, is capable of lessening pressure lose, enhancing filter efficiency, and extending filter sustainability.

Moreover, the electrospinning apparatus producing a filter of the present invention comprises at least 2 or more units and it is possible to consecutively electrospinning, thereby having an effect of mass-producing filter using nanofiber.

## Brief Description of the Drawings

FIG. 1 schematically shows a side view of an electrospinning apparatus according to an exemplary embodiment of the present invention.

FIG. 2 schematically illustrates a top plan view of a nozzle block installed in each unit of an electrospinning apparatus according to an exemplary embodiment of the present invention.

FIG. 3 schematically illustrates a view of an auxiliary carry device of an electrospinning apparatus according to an exemplary embodiment of the present invention.

FIG. 4 schematically illustrates a view of an auxiliary carry device of an electrpsinning apparatus according to another exemplary embodiment of the present invention.

FIG. 5 to FIG. 8 schematically illustrate a side view of operating process of an elongated sheet carry speed adjusting device of an electrospinning apparatus according to an exemplary embodiment of the present invention.

FIG. 9 schematically shows a cross-sectional view of a filter provided polyvinylidene fluoride nanofiber non-woven fabric between two cellulose substrates according to an exemplary embodiment of the present invention.

FIG. 10 schematically shows a cross-sectional view of a filter provided polyvinylidene fluoride nanofiber non-woven fabric between two bicomponent substrates according to an exemplary embodiment of the present invention.

FIG. 11 schematically shows a cross-sectional view of a filter provided high melting point and low melting point polyvinylidene fluoride nanofiber non-woven fabric between two polyethylene terephthalate substrates according to an exemplary embodiment of the present invention.

FIG. 12 schematically shows a cross-sectional view of a filter provided polyurethane and polyvinylidene fluoride mixed nanofiber non-woven fabric between two substrates according to an exemplary embodiment of the present invention.

FIG. 13 schematically depicts a cross-sectional view of a filter provided polyvinylidene fluoride nanofiber non-woven fabric between a first bicomponent substrate laminated on a first PET substrate and a second bicomponent substrate laminated on a second PET substrate according to an exemplary embodiment of the present invention.

FIG. 14 schematically depicts a cross-sectional view of a filter provided high melting point and low melting point polyvinylidene fluoride nanofiber non-woven fabric between a first bicomponent substrate laminated on a first PET substrate and a second bicomponent substrate laminated on a second PET substrate according to an exemplary embodiment of the present invention.

FIG. 15 schematically depicts a cross-sectional view of a filter provided nylon nanofiber non-woven fabric between a first bicomponent substrate laminated on a first PET substrate and a second bicomponent substrate laminated on a second PET substrate according to an exemplary embodiment of the present invention.

FIG. 16 schematically depicts a cross-sectional view of a filter provided polyvinylidene fluoride nanofiber non-woven fabric between a second bicomponent substrate laminated on a first bicomponent substrate and a third bicomponent substrate laminated on a fourth bicomponent substrate according to an exemplary embodiment of the present invention.

FIG. 17 schematically illustrates a side view of an electrospinning apparatus according to an exemplary embodiment of the present invention.

FIG. 18 schematically shows a cross-sectional view of a filter provided polyvinylidene fluoride nanofiber non-woven fabric with different fiber diameter between two substrates according to an exemplary embodiment of the present invention.

FIG. 19 schematically shows a cross-sectional view of a filter provided 2 layer nylon nanofiber non-woven fabric and polyvinylidene fluoride nanofiber non-woven fabric between two substrates according to an exemplary embodiment of the present invention.

FIG. 20 schematically shows a cross-sectional view of a filter provided 2 layer polyurethane nanofiber non-woven fabric and polyvinylidene fluoride nanofiber non-woven fabric between two substrates according to an exemplary embodiment of the present invention.

FIG. 21 schematically shows a cross-sectional view of a filter provided 2 layer low melting point polyvinylidene fluoride nanofiber non-woven fabric and high melting point polyvinylidene fluoride nanofiber non-woven fabric between two substrates according to an exemplary embodiment of the present invention.

**Description of Reference Numbers of Drawings**

| | |
|---|---|
| 1, 1': | electrospinning apparatus, |
| 3: | supply roller, |
| 5: | winding roller, |
| 7: | main control device, |
| 8: | spinning solution main tank, |
| 10a, 10b, 10c: | unit, |
| 11: | nozzle block, |
| 12: | nozzle, |
| 13: | collector, |
| 14, 14a, 14b, 14c: | voltage generator, |

| 15, 15a, 15b: | elongated sheet, |
|---|---|
| 16: | auxiliary carry device, |
| 16a: | auxiliary belt, |
| 16b: | auxiliary belt roller, |
| 18: | case, |
| 19: | insulation member, |
| 30: | elongated sheet carry speed adjusting device, |
| 31: | buffer section, |
| 33, 33': | support roller, |
| 35: | adjusting roller, |
| 40: | pipe, |
| 60: | temperature adjusting control device, |
| 70: | thickness measurement device, |
| 80: | permeability measuring device, |
| 90: | laminating device, |
| 100: | laminating device, |
| 200: | overflow device, |
| 211, 231: | agitation device, |
| 212, 213, 214, 233: | valve, |
| 216: | second feed pipe, |
| 218: | second feed control device, |
| 220: | middle tank, |
| 222: | second sensor, |
| 230: | recycled tank, |
| 232: | first sensor, |
| 240: | supply pipe, |
| 242: | supply control valve, |
| 250: | spinning solution return path, |
| 251: | first feed pipe, |
| 300: | VOC recycling device, |
| 310: | condensation device, |
| 311, 321, 331, 332: | pipe, |
| 320: | distillation device, |
| 330: | solvent storage device, |

**Detailed Description of the Preferred Embodiments**

While this invention has been described in connection with what is presently considered to be practical exemplary embodiments, it is to be understood that the invention is not limited to the disclosed embodiments, but, on the contrary, is intended to cover various modifications and equivalent arrangements included within the spirit and scope of the appended claims.

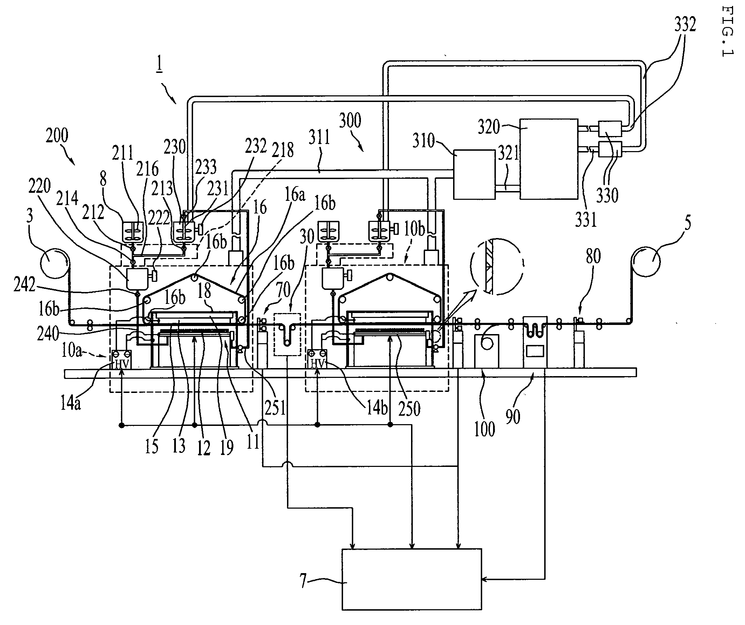

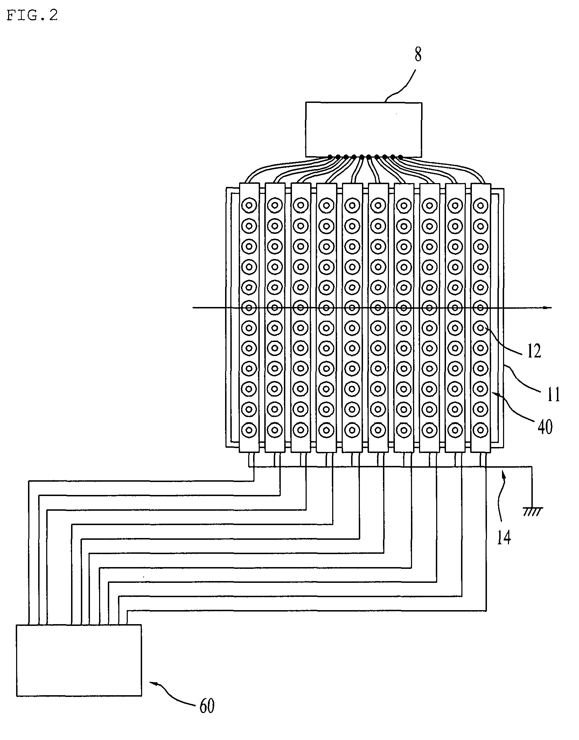

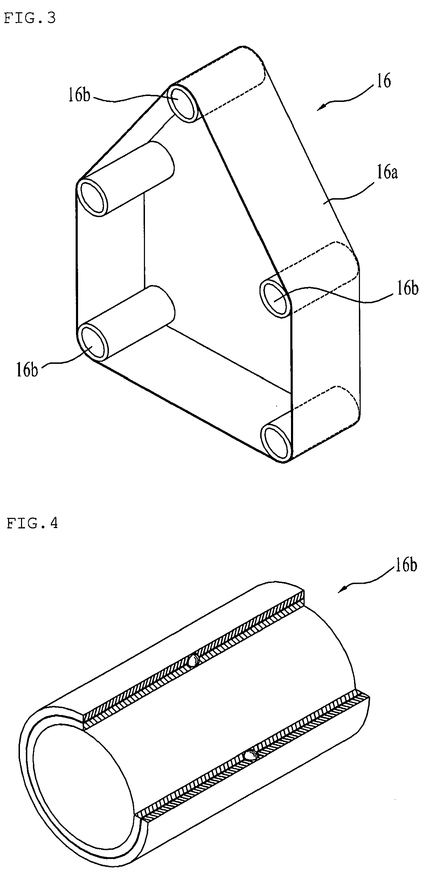

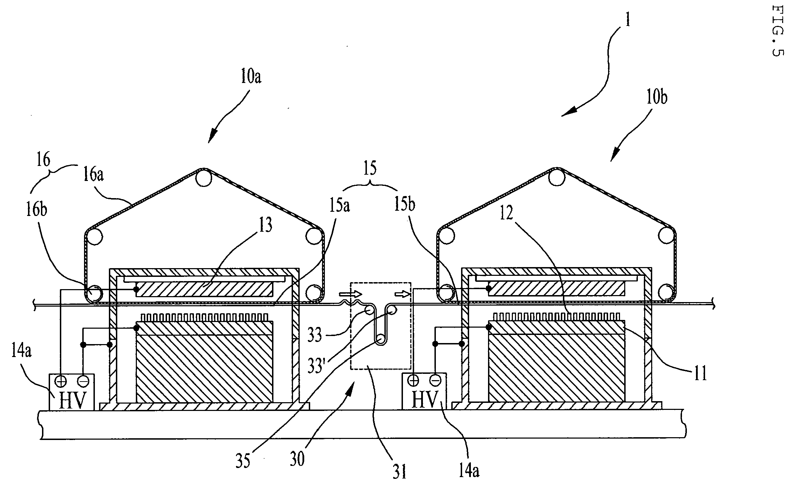

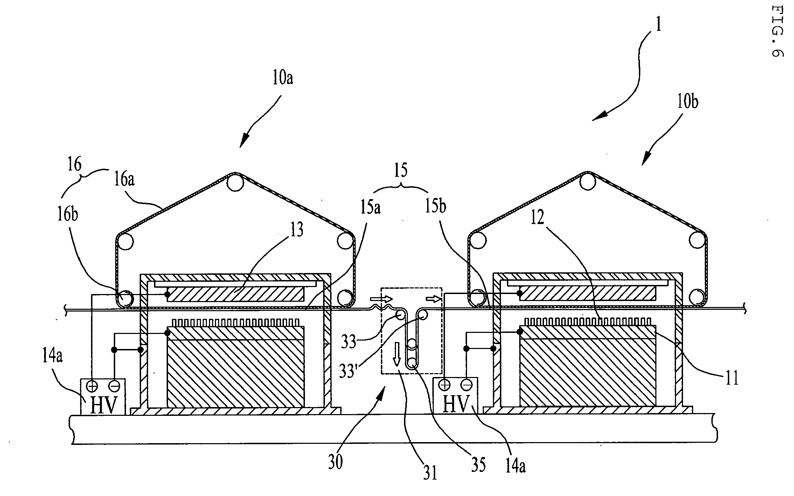

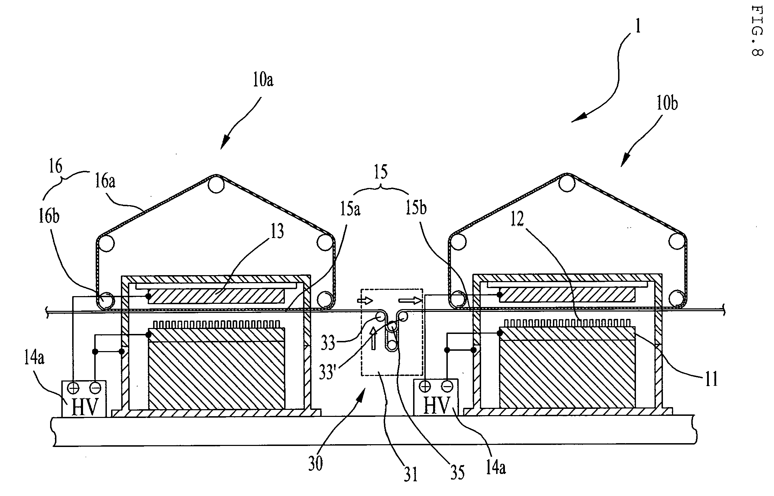

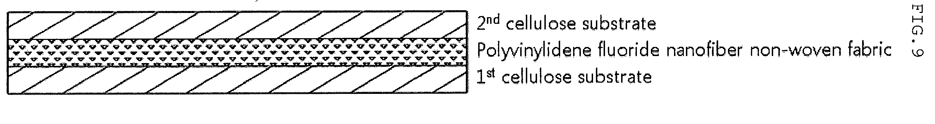

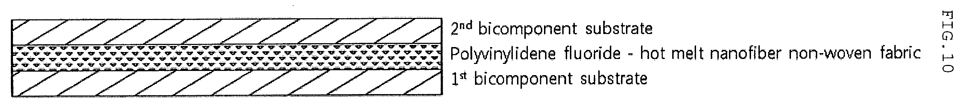

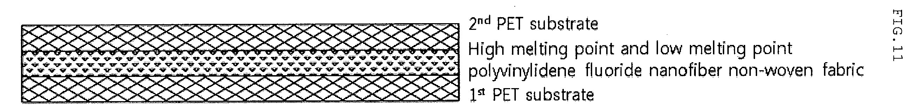

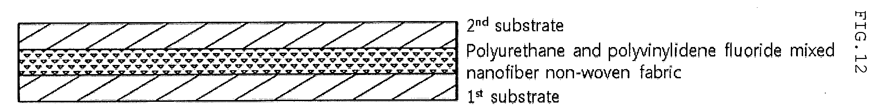

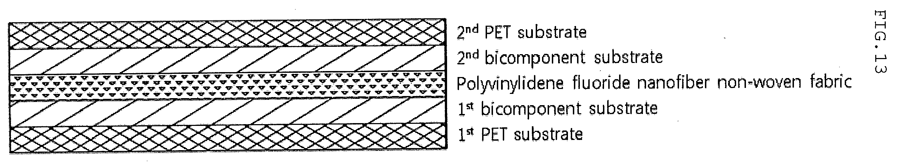

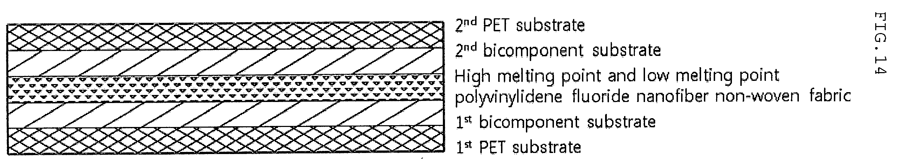

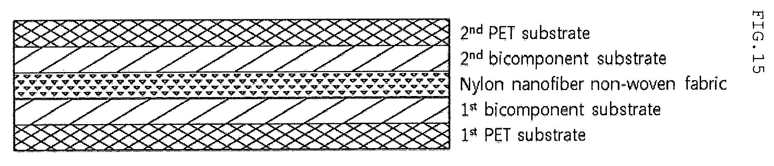

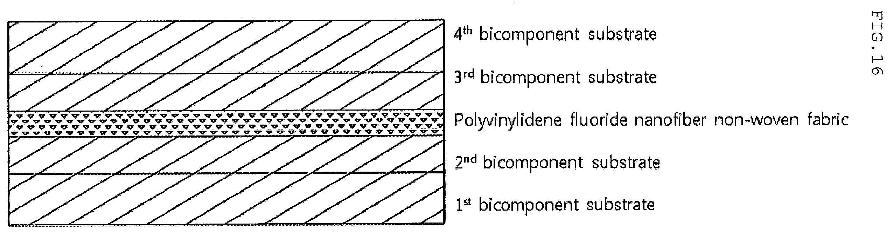

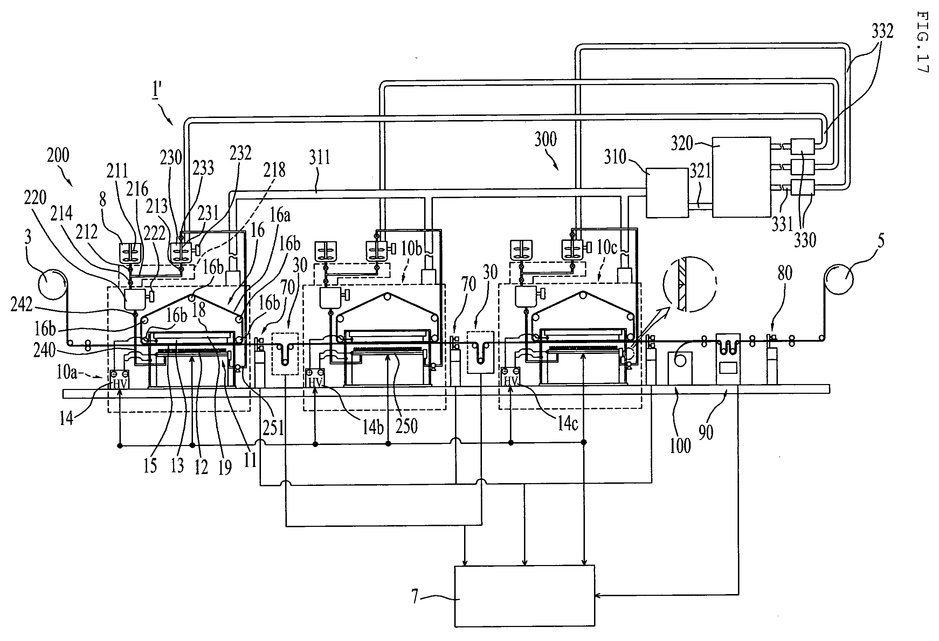

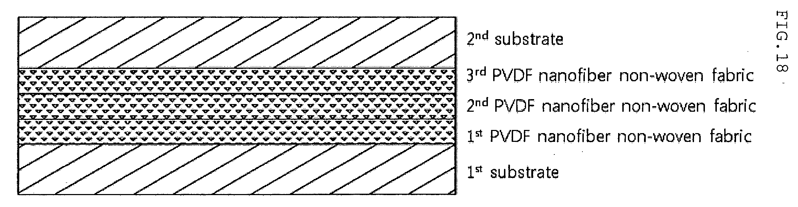

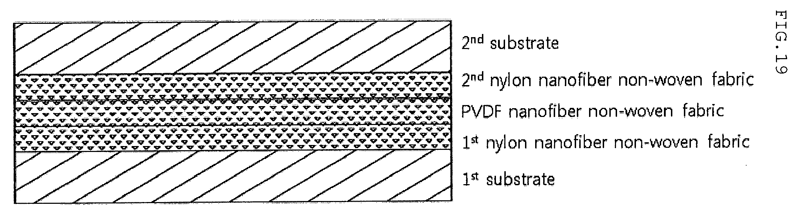

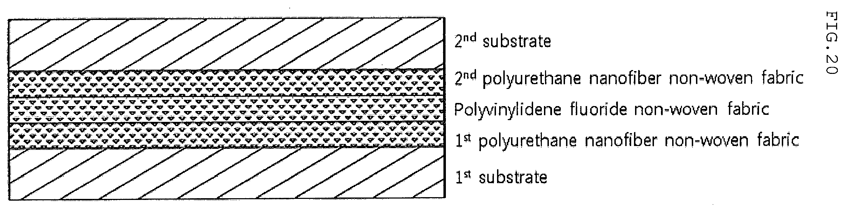

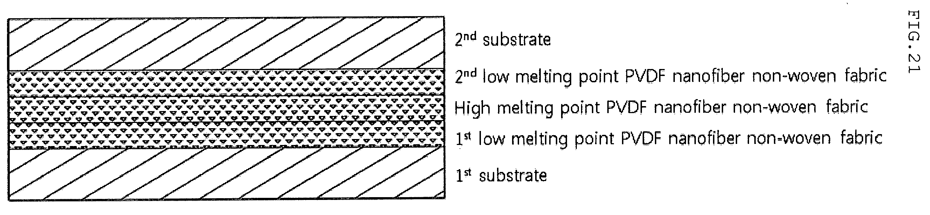

FIG. 1 schematically shows a side view of an electrospinning apparatus according to an exemplary embodiment of the present invention, FIG. 2 schematically illustrates a top plan view of a nozzle block installed in each unit of an electrospinning apparatus according to an exemplary embodiment of the present invention, FIG. 3 schematically illustrates a view of an auxiliary carry device of an electrospinning apparatus according to an exemplary embodiment of the present invention, FIG. 4 schematically illustrates a view of an auxiliary carry device of an electrpsinning apparatus according to another exemplary embodiment of the present invention, FIG. 5 to FIG. 8 schematically illustrate a side view of operating process of an elongated sheet carry speed adjusting device of an electrospinning apparatus according to an exemplary embodiment of the present invention, FIG. 9 schematically shows a cross-sectional view of a filter provided polyvinylidene fluoride nanofiber non-woven fabric between two cellulose substrates according to an exemplary embodiment of the present invention, FIG. 10 schematically shows a cross-sectional view of a filter provided polyvinylidene fluoride nanofiber non-woven fabric between two bicomponent substrates according to an exemplary embodiment of the present invention, FIG. 11 schematically shows a cross-sectional view of a filter provided high melting point and low melting point polyvinylidene fluoride nanofiber non-woven fabric between two polyethylene terephthalate substrates according to an exemplary embodiment of the present invention, FIG. 12 schematically shows a cross-sectional view of a filter provided polyurethane and polyvinylidene fluoride mixed nanofiber non-woven fabric between two substrates according to an exemplary embodiment of the present invention, FIG. 13 schematically depicts a cross-sectional view of a filter provided polyvinylidene fluoride nanofiber non-woven fabric between a first bicomponent substrate laminated on a first PET substrate and a second bicomponent substrate laminated on a second PET substrate according to an exemplary embodiment of the present invention, FIG. 14 schematically depicts a cross-sectional view of a filter provided high melting point and low melting point polyvinylidene fluoride nanofiber non-woven fabric between a first bicomponent substrate laminated on a first PET substrate and a second bicomponent substrate laminated on a second PET substrate according to an exemplary embodiment of the present invention, FIG. 15 schematically depicts a cross-sectional view of a filter provided nylon nanofiber non-woven fabric between a first bicomponent substrate laminated on a first PET substrate and a second bicomponent substrate laminated on a second PET substrate according to an exemplary embodiment of the present invention, and FIG. 16 schematically depicts a cross-sectional view of a filter provided polyvinylidene fluoride nanofiber non-woven fabric between a second bicomponent substrate laminated on a first bicomponent substrate and a third bicomponent substrate laminated on a fourth bicomponent substrate according to an exemplary embodiment of the present invention. FIG. 17 schematically illustrates a side view of an electrospinning apparatus according to an exemplary embodiment of the present invention, FIG. 18 schematically shows a cross-sectional view of a filter provided polyvinylidene fluoride nanofiber non-woven fabric with different fiber diameter between two substrates according to an exemplary embodiment of the present invention, FIG. 19 schematically shows a cross-sectional view of a filter provided 2 layer nylon nanofiber non-woven fabric and polyvinylidene fluoride nanofiber non-woven fabric between two substrates according to an exemplary embodiment of the present invention, FIG. 20 schematically shows a cross-sectional view of a filter provided 2 layer polyurethane nanofiber non-woven fabric and polyvinylidene fluoride nanofiber non-woven fabric between two substrates according to an exemplary embodiment of the present invention, and FIG. 21 schematically shows a cross-sectional view of a filter provided 2 layer low melting point polyvinylidene fluoride nanofiber non-woven fabric and high melting point polyvinylidene fluoride nanofiber non-woven fabric between two substrates according to an exemplary embodiment of the present invention.

As illustrated in the drawings, the elecctrospinning apparatus(1) according to the present invention comprises a bottom-up electrpspinning apparatus(1), consecutively provided at least one or more units(10a, 10b) separated in predetermined space, each of the unit(10a, 10b) individually electrospinning the same polymer spinning solution, or individually electrospinning polymer spinning solution with different material, and produces filter material such as non-woven fabric.

For this, each of the unit(10a, 10b) comprises a spinning solution main tank(8) filling polymer spinning solution inside, a metering pump(not shown) for providing quantitatively polymer spinning solution filled in the spinning solution main tank(8), a nozzle block(11) installed a plurality of nozzle(12) comprising in pin form and discharging polymer spinning solution filled in the spinning solution main tank(8), a collector(13) separated in predetermined space from the nozzle(12) to collect polymer spinning solution jetted from the nozzle(12), and a voltage generator(14a, 14b) generating voltage to the collector(13).

The electrospinning apparatus(1) of the present invention according to the structure as stated above quantitatively provides polymer spinning solution filled in a spinning solution main tank(8) to a plurality of nozzle(12) formed in a nozzle block(11) through a metering pump, provided polymer spinning solution spun and line-focused on a collector(13) flowing high voltage through a nozzle(12), forms nanofiber non-woven fabric on an elongated sheet(15) moved from a collector(13), and formed nanofiber non-woven fabric produces filter or non-woven fabric.

Here, among each unit(10a, 10b) of the electrospinning apparatus(1), in a unit(10a) located in the front-end, provided a supply roller(3) for providing an elongated sheet(15) laminating formed nanofiber non-woven fabric by jetting of polymer spinning solution, and in a unit(10b) located in the rear-end, provided a winding roller(5) for winding an elongated sheet(15) laminating formed nanofiber non-woven fabric.

Meanwhile, an elongated sheet(15) going through each of the unit(10a, 10b) and laminating forming polymer spinning solution is properly comprising non-woven fabric or fabrics, and it does not limited thereto.

In this case, material of polymer spinning solution jetted through each unit(10a, 10b) is not limited, for example, polypropylene(PP), polyethylene terephthalate(PET), polyvinylidene fluoride, nylon, polyvinyl acetate, polymethyl methacrylate, polyacrylonitrile(PAN), polyurethane(PUR), polybutylene terephthalate(PBT), polyvinyl butyral, polyvinyl chloride, polyethyleneimine, polyolefin, polyactic acid(PLA), polyvinyl acetate(PVAc), polyethylene naphthalate(PEN), polyamide(PA), polyvinyl alcohol(PVA), polyethylene imide(PEI), polycaprolactone(PCL), polyacticacidglycidylrolsan(PLGA), silk, cellulose, chitosan, etc. Among them, polypropylene(PP) material and heat resistant polymer such as polyamide, polyimide, polyamideimide, poly(meta-phenylene isophthalamide), polysulfone, polyether ketone, polyether imide, aromatic polyester such as polyethylene terephthalate, polytrimethylene terephthalate, polyethylene naphthalate, polytetrafluoroethylene, polyphosphazene group such as polydiphenoxyphosphazene, poly bis[2-(2-methoxyethoxy)phosphazene], polyurethane and polyurethane copolymer such as polyesther polyurethane, and polymer such as cellulose acetate, cellulose acetate butyrate, and cellulose acetate propionate are preferably used in common.

Moreover, spinning solution provided through a nozzle(12) in the unit(10a, 10b) is solution dissolved polymer of synthetic resin material capable of electrospinning, the type of solvent is not limited if it is possible to dissolve polymer, for example, phenol, formic acid, sulfuric acid, m-cresol, T-fluorineaceticanhydride/ dichloromethane, water, N-methylmorpholine, N-oxide, chloroform, tetrahydrofuran, and aliphatic ketone group such as methyl isobutylketone, methylelthylketone, and aliphatic hydroxyl group such as m-butyl alcohol, isobutyl alcohol, isopropyl alcohol, methyl alcohol, ethanol, and aliphatic compound group such as hexane, tetrachlorethylene, acetone, and glycol group such as propylene glycol, diethylene glycol, ethylene glycol, and halogen group such as trichloroethylene, dichloromethane, and aromatic compound group such as toluene, xylene, and alicyclic compound group such as cyclohexanon, cyclohexane, and ester group such as n-butyl acetate, ethyl acetate, and aliphatic ether gropi such as butylcellosalve, 2-ethoxyethanol acetate, 2-ethoxyethanol, and amide group such as dimethylformamide, dimethylacetamide, and a plurality of solvent can be mixed and used. In spinning solution, additives such as conductive improver are preferably contained.

Meanwhile, the electrospinning apparatus(1) according to the present invention provided an overflow device(200). In other words, in each unit(10a, 10b) of the electrospinning apparatus(1) each provided an overflow device(200) comprising a spinning solution main tank(8), a second feed pipe(216), a second feed control device(218), a middle tank(220), and a recycled tank(230).

According to an embodiment of the present invention, in each unit(10a, 10b) of the electrospinning apparatus(1), each provided an overflow device(200), or among each of the unit(10a, 10b), one unit(10a) provided an overflow device(200), and in the overflow device(200), a unit(10b) located in the rear-end can comprise structure connected integrally.

According to the structure as stated above, the spinning solution main tank(8) stores spinning solution which is raw material of nanofiber. In the spinning solution main tank(8) provided an agitation device(211) for preventing spinning solution separation or solidification.

The second feed pipe(216) comprises a pipe connected to the spinning solution main tank(8) or a recycled tank(230) and a valve(212, 213, 214), and spinning solution is carried from the spinning solution main tank(8) or the recycled tank(230) to a middle tank(220).

The second feed control device(218) controls valve(212, 213, 214) of the second feed pipe(216), and controls carry motion of the second feed pipe(216). The valve(212) controls carry of spinning solution from a spinning solution main tank(8) to a middle tank(220), and the valve(213) controls carry of spinning solution from a recycled tank(230) to a middle tank(220). The valve(214) controls amount of polymer spinning solution flowed from a spinning solution main tank(8) and a recycled tank(230) to a middle tank(220).

The control method as stated above controls according to level of spinning solution measured by a second sensor(222) provided in the following middle tank(230).

The middle tank(220) stores spinning solution provided from a spinning solution main tank(8) or a recycled tank(230), provides the spinning solution to a nozzle block(11), and provided a second sensor(222) which measures level of provided spinning solution.

The second sensor(222) is properly a sensor which can measure level, such as a light sensor or an infrared sensor.

In bottom of the middle tank(220) provided a supply pipe(240) which supplies spinning solution to a nozzle block(11) and a supply control valve(242). The supply control valve(242) controls the supply pipe(240) supply motion.

The recycled tank(230) sores spinning solution overflowed and retrieved, and having an agitation device(231) for preventing separation and solidification of spinning solution, and having a first sensor(232) measuring level of retrieved spinning solution.

The first sensor(232) is properly a sensor which can measure level, such as a light sensor or an infrared sensor.

Meanwhile, spinning solution overflowed from a nozzle block(11) is retrieved through a spinning solution return path(250) provided in bottom of a nozzle block(11). The spinning solution return path(250) retrieves spinning solution through a first feed pipe(251) to a recycled tank(230).

Also, a first feed pipe (251) has a pipe connected to the recycled tank(230) and a pump, and by power of the pump, spinning solution is carried from a spinning solution return path(250) to a recycled tank(230).

In this case, the recycled tank(230) is properly at least one or more, and in the case of two or more, a plurality of the first sensor(232) and valve(233) can be provided.

Moreover, in the case of two or more recycled tank(230), as a plurality of valve(233) located in top of the recycled tank(230) is provided, a first feed control device(not shown) according to level of the first sensor(232) provided in the recycled tank(230) controls two or more valve(233) located in top, and controls whether to carry spinning solution to any one recycled tank(230) among a plurality of recycled tank(230).

Meanwhile, the electrospinning apparatus(1) has a VOC recycling device(300). In other words, in each unit(10a, 10b) of the electrospinning apparatus(1), the VOC recycling device(300) comprises a condensation device(310) for condensing and liquefying VOC(Volatile Organic Compounds) generated when spinning polymer spinning solution through a nozzle(12), a distillation device(320) distilling and liquefying condensed VOC through the condensation device(310), and a solvent storage device(330) storing liquefied solvent through the distillation device(320).

Here, the condensation device(310) is properly comprising water-cooled, evaporative, or air-cooled condensation device, but it does not limited thereto.

Meanwhile, pipes(311, 331) are each connected and installed to inflow VOC in evaporation state generated in each of the unit(10a, 10b) to a condensation device(310) and to store VOC in liquefaction state generated in the condensation device(310) to a solvent storage device(330).

In other words, pipes(311,331) are each connected and installed to each of the unit(10a, 10b), to a condensation device(310) and to a solvent storage device(330).

According to an embodiment of the present invention, comprising a structure of after condensing VOC through the condensation device(310) and providing condensed VOC in liquefaction state to a solvent storage device(330), or in the case of between the condensation device(310) and the solvent storage device(330) provided a distillation device(320) and one or more solvent is applied, each solvent can be comprised in separation and classification.

Here, the distillation device(320) is connected to a condensation device(310), heats VOC in liquefaction state in high temperature heat and evaporates it, again cooling it, and liquefied VOC is provided to a solvent storage device(330).

In this case, the VOC recycling device(300) comprises a condensation device(310) which provides air and cooling water to evaporated VOC discharged through each unit(10a, 10b) and condenses and liquefies, a distillation device(320) which heats VOC condensed through the condensation device(310), making it in evaporation state, again cooling it and making in liquefaction state, and a solvent storage device(330) storing VOC liquefied through the distillation device(320).

Here, the distillation device(320) is properly comprising as fractional distillation device, but it does not limited thereto.

In other words, pipes(311, 321, 331) for interconnecting each of the unit(10a, 10b) and a condensation device(310), the condensation device(310) and a distillation device(320), and the distillation device(320) and a solvent storage device(330) are each connected and installed.

In addition, measuring solvent content of spinning solution overflowed and retrieved in the recycled tank(230). The measurement extracts sample of some spinning solution among recycled tank(230), and analyzes the sample. Analysis of spinning solution can be held by method already known.

Based on the measurement result as stated above, required amount of solvent provides VOC in liquefaction state supplied to the solvent storage device(330) provides to the recycled tank(230) through a pipe(332). In other words, liquefied VOC is provided to the recycled tank(230) in required amount according to the measurement result, and can be reused and recycled as solvent.

Here, a case(18) comprising each unit(10a, 10b) of the electrospinning apparatus(1) is properly comprising an electric conductor, or the case(18) comprises an electric insulator, or the case(18) can be mixed an electric conductor and an electric insulator and applied, and other various materials can be comprised.

Moreover, in the case of top of the case (18) comprises an electric insulator and the bottom comprises an electric conductor, an insulation member(19) can be deleted. For this, the case(18) mutually combines the bottom forming an electric conductor and the top comprising an electric insulator and properly forms one case(18), but it does not limited thereto.

As stated above, the case(18) forms an electric conductor and an electric insulator, and top of the case(18) forms an electric insulator, in order to attach a collector(13) in upper inner side of case(18), separately provided insulation member(19) can be deleted, and because of this, composition of device can be streamlined.

Also, insulation between the collector(13) and the case(18) can be optimized, in the case of operating electrospinning by applying 35kV between a nozzle block(11) and a collector(13), insulation breakdown generated between the collector(13) and the case(18) and other members can be prevented.

In addition, as leak voltage can be stopped in desired realm, surveillance in current provided from a voltage generator(14a, 14b) is possible, and error in the electrospinning apparatus(1) can be noticed early, so long time consecutive operation of the electrospinning apparatus(1) is possible, manufacture of nanofiber with required quality is stable, and mass-production of nanofiber is possible.

Here, thickness(a) of the case(18) forming as an electric insulator comprises satisfying "a=8mm".

Because of this, in the case of operating electrospinning by applying 40kV between the nozzle block(11) and the collector(13), insulation breakdown generated between the collector(13) and the case(18) and other members can be prevented, and leak voltage can be limited in desired realm.

Meanwhile, in each pipe(40) of a nozzle block(11) installed in each unit(10a, 10b) of the electrospinning apparatus provided a temperature adjusting control device(60) and it is connected to a voltage generator(14).

In other words, as illustrated in FIG. 2, installed in each of the unit(10a, 10b), in pipe(40) of nozzle block(11) comprising a plurality of nozzle(12) in the top and supplying polymer spinning solution provide a temperature adjusting control device(60).

Here, polymer spinning solution in the nozzle block(11) is provided from a spinning solution main tank(8) which stored polymer spinning solution to each pipe(40) through solution flow pipe.

Moreover, polymer spinning solution provided to each of the pipe(40) is discharged and jetted through a plurality of nozzle(12) and collected to an elongated sheet(15) in nanofiber form.

In top of each pipe(40), in length direction, a plurality of nozzle(12) is separated in predetermined space and mounted, and the nozzle(12) and the pipe(40) comprises as an electric conductor member, electrically connected and mounted to the pipe(40)

Here, as illustrated in FIG. 3, an auxiliary carry device(16) for adjusting feed speed of an elongated sheet(15) incoming and providing in each unit(10a, 10b) of the electrospinning apparatus(1) is provided.

The auxiliary carry device(16) comprises an auxiliary belt(16a) which rotates and synchronizes feed speed of an elongated sheet(15) in order to facilitate desorption and carrying of an elongated sheet(15) attached by electrostatic gravitation to a collector(13) installed in each unit(10a, 10b), and an auxiliary belt roller(16b) supporting and rotating the auxiliary belt(16a).

According to the structure as mentioned above, an auxiliary belt(16a) rotates by rotation of the auxiliary belt roller(16b), an elongated sheet(15) incomes and supplies to units(10a, 10b) by rotation of the auxiliary belt(16a), for this, any one auxiliary belt roller(16b) among the auxiliary belt roller(16b) is connected to a motor capable of rotation.

According to an embodiment of the present invention, the auxiliary belt(16a) is provided 5 auxiliary belt rollers(16b), comprising by a motor motion, any one auxiliary belt roller(16b) rotates, as auxiliary belt(16a) rotates simultaneously the other auxiliary belt roller(16b) rotates, or the auxiliary belt(16a) is provided 2 or more auxiliary belt rollers(16b), comprising by a motor motion, any one auxiliary belt roller(16b) rotates, according to this, auxiliary belt(16a) and the other auxiliary belt roller(16b) rotate.

Meanwhile, an embodiment of the present invention comprises an auxiliary belt roller(16b) that the auxiliary carry device(16) is capable of driving by a motor and an auxiliary belt(16a), and as illustrated in FIG. 12, the auxiliary belt roller(16b) can be comprised a roller with low coefficient of friction.

In this case, the auxiliary belt roller(16b) is properly comprised of a roller including bearing with low coefficient of friction.

In an embodiment of the present invention, the auxiliary carry device(16) comprises an auxiliary belt(16a) and an auxiliary belt roller(16b) with low coefficient of friction, and an auxiliary belt(16a) can be comprised of only a roller with low coefficient of friction and carried an elongated sheet(15).

Also, in an embodiment of the present invention, for the auxiliary belt roller(16b), a roller with low coefficient of friction is applied, and if a roller has low coefficient of friction, the form and composition is not limited, it is applied to a roller comprising bearings such as rolling bearing, oil bearing, ball bearing, roller bearing, sliding bearing, sleev bearing, hydrodynamic journal bearing, hydrostatic bearing, pneumatic bearing, air dynamic bearing, air static bearing, and air bearing, and applied to a roller decreasing coefficient of friction by including materials such as plastic and emulsifier, and additives.

Meanwhile, the electrospinning apparatus(1) according to the present invention is provided a thickness measurement device(70). In other words, as illustrated in FIG. 1, between each unit(10a, 10b) of the electrospinning apparatus(1) is provided a thickness measurement device(70), and according to thickness measured by the thickness measurement device(70), feed speed(V) and a nozzle block(11) are controlled.

According to the structure as mentioned above, in the case of thickness of nanofiber non-woven fabric discharged from a unit(10a) located in the front-end of the electrospinning apparatus(1) is measured thinner than deviation, the next unit(10b) feed speed(V) can be slowed, or discharging amount of nozzle block(11) is increased, by adjusting voltage intensity of a voltage generator(14a, 14b), increases discharging amount of nanofiber non-woven fabric per unit, and makes thicker thickness.

Also, in the case of thickness of nanofiber non-woven fabric discharged from a unit(10a) located in the front-end of the electrospinning apparatus(1) is measured thicker than deviation, the next unit(10b) feed speed(V) can be faster, or discharging amount of nozzle block(11) is lessen, by adjusting voltage intensity of a voltage generator(14a, 14b), lessen discharging amount of nanofiber non-woven fabric per unit, lessen laminating amount, and making thinner thickness, and because of this, nanofiber non-woven fabric having uniformed thickness can be produced.

Here, the thickness measurement device(9) is arranged in up and down opposite sides put between an elongated sheet(15) which is capable of incoming and supplying, and provided a thickness measurement portion comprising a pair of ultrasonic wave, longitudinal wave, and transverse wave measuring method that measures the distance to top or bottom of the elongated sheet(15) by ultrasonic wave measuring method.

Based on the distance measured by the pair of ultrasonic wave measuring device, thickness of the elongated sheet(15) can be calculated. In other words, the thickness measurement device projects ultrasonic wave, longitudinal wave, and transverse wave to an elongated sheet(15) laminated nanofiber non-woven fabric, each ultrasonic signal of longitudinal wave and transverse wave measures reciprocating movement time from an elongated sheet(15), in other words, after measuring propagation time of each longitudinal wave and transverse wave, and using ultrasonic wave, longitudinal wave, and transverse wave and measuring the thickness from a desired formula using the measured propagation time of longitudinal wave and transverse wave, propagation speed of longitudinal wave and transverse wave from reference temperature of an elongated sheet(15) laminated nanofiber non-woven fabric, and constant of temperature of propagation speed of longitudinal wave and transverse wave.

In other words, the thickness measurement device(70) measures each propagation time of ultrasonic wave, longitudinal wave, and transverse wave, and by calculating thickness of an elongated sheet(15) laminated nanofiber non-woven fabric from a desired formula using propagation time of the measured longitudinal wave and transverse wave, propagation velocity of longitudinal wave and transverse wave from reference temperature of an elongated sheet(15), and constant of temperature of propagation speed of longitudinal wave and transverse wave, even in state of inner temperature is nonuniform, it can precisely measure thickness by compensating error occurred by change in propagation speed according to temperature change, and can precisely measure thickness in any kind of temperature distribution inside nanofiber non-woven fabric.

Meanwhile, the electrospinning apparatus(1) of the present invention is provided a thickness measurement device(70) which measures thickness of nanofiber non-woven fabric of an elongated sheet(15) carried after polymer spinning solution is sprayed and laminated, and controls an elongated sheet(15) feed speed and a nozzle block(11). Also, the electrospinning apparatus(1) is provided an elongated sheet carry speed adjusting device(30) for adjusting feed speed of an elongated sheet(15).

Here, the elongated sheet carry speed adjusting device(30) comprises a buffer section(31) forming between each unit(10a, 10b) of the electrospinning apparatus(1), a pair of support roller(33, 33') provided on the buffer section(31) and supporting an elongated sheet(15), and an adjusting roller(35) provided between the pair of support roller(33, 33').

In this case, the support roller(33, 33') is for supporting the elongated sheet(15) carry when conveying of an elongated sheet(15) laminating formed nanofiber non-woven fabric by spinning solution jetted by a nozzle(12) in each of the unit(10a, 10b), and the support roller(33, 33') is each provided in the front-end and the rear-end of a buffer section(31) formed between each of the unit(10a, 10b).

In addition, the adjusting roller(35) is provided between the pair of support roller(33, 33'), the elongated sheet(15) is wound, and by up and down motion of the adjusting roller (35), feed speed and movement time of an elongated sheet(15a, 15b) is adjusted according to each of the unit(10a, 10b).

For this, a sensing sensor(not shown) for sensing feed speed of an elongated sheet (15a, 15b) in each of the unit (10a, 10b) is provided, and a main control device(7) for controlling an adjusting roller(35) motion according to feed speed of an elongated sheet(15a, 15b) in each unit(10a, 10b) sensed by the sensing sensor is provided.

In an embodiment of the present invention, in each of the unit(10a, 10b), an elongated sheet(15a, 15b) feed speed is sensed, a controlling portion controls an adjusting roller(35) motion according to the sensed elongated sheet(15a, 15b) feed speed, or sensing an auxiliary belt(16a) for conveying the elongated sheet(15a, 15b) and provided in the outer side of a collector(13) or an auxiliary belt roller(16b) for driving the auxiliary belt(16a) or a motor(not shown) driving speed, and according to this, a controlling portion controls an adjusting roller(35) motion.

According to the structure described above, in the case of the sensing sensor sensed feed speed of an elongated sheet(15a) in a unit(10a) located in the front-end among each unit(10a, 10b) is faster than feed speed of an elongated sheet (15b) in unit(10b) located in the rear-end, as illustrated in FIG. 5 to FIG. 6, in order to prevent sagging of an elongated sheet(15a) carried from a unit(10a) located in the front-end, provided between the pair of support roller(33, 33'), an elongated sheet(15) moves wound adjusting roller(35) to lower side, among an elongated sheet(15) carried from a unit(10a) located in the front-end to a unit(10b) located in the rear-end, pulling an elongated sheet(15a) carried to the external side of a unit(10a) located in the front-end and excessively carried to a buffer section(31) located between each unit(10a, 10b), and correct and control to make feed speed of an elongated sheet(15a) in a unit(10a) located in the front-end and feed speed of an elongated sheet(15b) in unit(10b) located in the rear-end same, and prevents sagging and crumpling of an elongated sheet(15a).

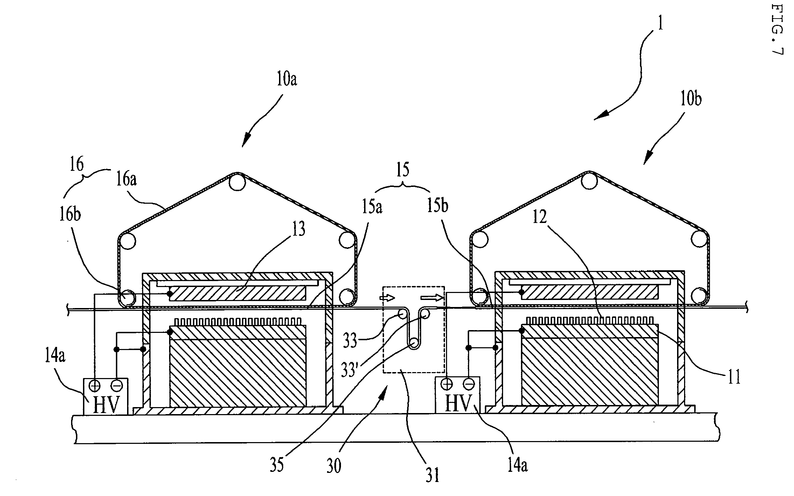

Meanwhile, in the case of the sensing sensor sensed feed speed of an elongated sheet(15a) in a unit(10a) located in the front-end among each unit(10a, 10b) is slower than feed speed of an elongated sheet (15b) in unit(10b) located in the rear-end, as illustrated in FIG. 7 to FIG. 8, in order to prevent snapping of an elongated sheet(15b) carried from a unit(10b) located in the rear-end, provided between the pair of support roller(33, 33'), an elongated sheet(15) moves wound adjusting roller(35) to upper side, among an elongated sheet(15) carried from a unit(10a) located in the front-end to a unit(10b) located in the rear-end, an elongated sheet(15a) carried to the external side of a unit (10a) located in the front-end and wound by an adjusting roller(35) in a buffer section(31) located between each unit(10a, 10b) is quickly provided to a unit(10b) in the rear-end, and correct and control to make feed speed of an elongated sheet(15a) in a unit(10a) located in the front-end and feed speed of an elongated sheet(15b) in unit(10b) located in the rear-end same, and prevents snapping of an elongated sheet(15a).

According to the structure as described above, by adjusting feed speed of an elongated sheet(15b) carried to a unit(10b) located in the rear-end among each of the unit(10a, 10b), it can achieve effects such as feed speed of an elongated sheet(15b) in a unit(10b) located in the rear-end among each of the unit(10a, 10b) and feed speed of an elongated sheet(15a) in a unit(10a) located in the front-end is same.

Meanwhile, the electrospinning apparatus(1) of the present invention is provided a permeability measuring device(80). In other words, a permeability measuring device(80) for measuring permeability of nanofiber non-woven fabric produced through the electrospinning apparatus(1) in the rear of a unit(10b) located in the rear-end among each unit(10a, 10b) is provided.

As described above, based on permeability of nanofiber non-woven fabric measured through the permeability measuring device(80), an elongated sheet(15) feed speed and a nozzle block(11) are controlled.

In the case of permeability of nanofiber non-woven fabric discharged through each unit(10a, 10b) of the electrospinning apparatus(1) is measured large, by slowing feed speed(V) of a unit(10b) located in the rear-end, by increasing discharging amount of a nozzle block(11), and by increasing discharging amount of nanofiber per unit area by adjusting voltage intensity of a voltage generator(14a, 14b), forms permeability small.

Also, in the case of permeability of nanofiber non-woven fabric discharged through each unit(10a, 10b) of the electrospinning apparatus(1) is measured small, by increasing feed speed(V) of a unit(10b) located in the rear-end, by increasing discharging amount of a nozzle block(11), and by decreasing discharging amount of nanofiber per unit area by adjusting voltage intensity of a voltage generator(14a, 14b), forms permeability large.

As described above, after measuring permeability of the nanofiber non-woven fabric, by controlling each unit(10a, 10b) feed speed and a nozzle block(11) according to permeability, nanofiber non-woven fabric having uniformed permeability can be produced.

Here, in the case of permeability deviation(P) of the nanofiber non-woven fabric is less than a desired value, feed speed(V) is not changed from the initial value, and in the case of the permeability (P) is a desired value or more, as feed speed(V) can be controlled to change from the initial value, control of feed speed(V) according to feed speed(V) control device is possible.

Also, except for feed speed(V) control, a nozzle block(11) discharging amount and voltage intensity can be adjusted, in the case of permeability deviation (P) is less than a desired value, a nozzle block(11) discharging amount and voltage intensity are not changed from the initial value, and in the case of the deviation (P) is a desired value or more, a nozzle block(11) discharging amount and voltage intensity are controlled to change from the initial value, and control of nozzle block(11) discharging amount and voltage intensity can be simplified.

Here, the electrospinning apparatus(1) comprises a main control device(7), and the main control device(7) controls a nozzle block(11), a voltage generator(14a, 14b), a thickness measurement device(70), an elongated sheet carry speed adjusting device(30), and a permeability measuring device(80).

Meanwhile, a laminating device(90) for laminating nanofiber non-woven fabric electrospun through each unit(10a, 10b) of the electrospinning apparatus(1) is provided in the rear of a unit(10b) located in the rear-end among each of the unit(10a, 10b), and according to the laminating device (90), the post-process of nanofiber non-woven fabric electrospun through the electrospinning apparatus(1) is performed.

Here, the electrospinning apparatus(1) of the present invention comprises a laminating device(100). The laminating device(100) laminates a substrate(not shown) on nanofiber non-woven fabric spun polymer spinning solution on an elongated sheet(15) through each unit(10a, 10b).

In this case, the laminating device(100) is provided in bottom of the nanofiber non-woven fabric, and a substrate provided through the laminating device(100) is laminated in lower side of nanofiber non-woven fabric.

In an embodiment of the present invention, the laminating device(100) is provided in bottom of nanofiber non-woven fabric to laminate the substrate in lower side of nanofiber non-woven fabric, and the laminating device(100) can be provided in top of nanofiber non-woven fabric to laminate the substrate in upper side of nanofiber non-woven fabric.

Also, the laminating device(100) can be each provided in top and bottom of nanofiber non-woven fabric to laminate a substrate in upper side and lower side of the nanofiber non-woven fabric.

The following description explains manufacturing method of filter comprising polyvinylidene fluoride nanofiber according to the electrospinning apparatus of the present invention.

The electrospinning apparatus of the present invention uses two units(10a, 10b), for polymer uses polyvinylidene fluoride, and for an elongated sheet(15) uses a cellulose substrate.

Meanwhile, in order to produce a filter of the present invention, polyvinylidene fluoride solution which dissolved polyvinylidene fluoride in organic solvent is provided to a spinning solution main tank(8) connected to each unit(10a, 10b) of the electrospinning apparatus, and polyvinylidene fluoride solution provided to the spinning solution main tank(8) is consecutively and quantitatively provided in a plurality of nozzle(12) of a nozzle block(11) provided high voltage through a metering pump(not shown). Polyvinylidene fluoride solution provided from each of the nozzle (12) electrospun and line-focused on a first cellulose substrate located on a collector(13) flowing high voltage through a nozzle(12), and laminating forming polyvinylidene fluoride nanofiber non-woven fabric.

Meanwhile, a cellulose substrate laminated polyvinylidene fluoride nanofiber non-woven fabric in each unit(10a, 10b) of the electrospinning apparatus(1) is carried from a first unit(10a) to a second unit(10b) by a supply roller(3) operated by a motor(not shown) driving and rotation of an auxiliary carry device(16) driving by rotation of the supply roller(3), the process is repeated, and polyvinylidene fluoride nanofiber non-woven fabric is consecutively electruspun and laminating formed on a first cellulose substrate.

Spinning solution provided to the spinning solution main tank(8) used polyvinylidene fluoride solution which dissolved polyvinylidene fluoride in organic solvent, and high melting point polyvinylidene fluoride and low melting point polyvinylidene fluoride can be mixed and used.

Also, in the process of electrospinning and laminating forming the polyvinylidene fluoride solution on a first cellulose substrate, by differing spinning conditions according to each unit(10a, 10b) of the electrospinning apparatus, polyvinylidene fluoride nanofiber non-woven fabric with large fiber diameter in a first unit(10a) is laminating formed, and polyvinylidene fluoride nanofiber non-woven fabric with small diameter in a second unit(10b) can be consecutively laminating formed.

Also, the electrospinning apparatus(1) comprises 3 or more units, by differing voltage according to each unit, a filter laminating formed 3 layers or more of polyvinylidene fluoride nanofiber non-woven fabric with different fiber diameter on a first cellulose substrate can be produced.

In order to provide grade of fiber diameter, a method of differing voltage intensity provided to each unit(10a, 10b) is possible, and by adjusting space between a nozzle(12) and a collector(13), nanofiber non-woven fabric with different fiber diameter can be formed. In the case of type of spinning solution and provided voltage intensity is same, nearer spinning distance, larger fiber diameter, and according to the principle of further spinning distance, smaller fiber diameter, nanofiber non-woven fabric with different fiber diameter can be formed. Also, by adjusting spinning solution concentration and viscosity, or by adjusting an elongated sheet feed speed, fiber diameter can be different.

According to the method as described above, after laminating forming polyvinylidene fluoride nanofiber non-woven fabric on a first cellulose substrate in each unit(10a, 10b), a second cellulose substrate is laminated on one side of the polyvinylidene fluoride nanofiber non-woven fabric in a laminating device(100) located in the rear-end of the electrospinning apparatus(1), goes through a process of thermosetting in a laminating device(90), and produces a filter.

Example 1

Polyvinylidene fluoride with weight average molecular weight of 50,000 is dissolved in N,N-Dimethylacetamide(DMAc) and produces spinning solution, and it is inserted in a spinning solution main tank of each unit of the electrospinning apparatus. In each unit, on a first cellulose substrate, the spinning solution is consecutively electrospinning in conditions of distance between an electrode and a collector is 40cm, applied voltage 20kV, spinning solution flow rate is 0.1mL/h, temperature 22°C, and humidity 20%, and laminating formed polyvinylidene fluoride nanofiber non-woven fabric with thickness of $3\mu$m. In a laminating device located in the rear-end of the electrospinning apparatus, a second cellulose substrate is laminated on polyvinylidene fluoride nanofiber non-woven fabric laminating formed on the first cellulose substrate, thermosetting in a laminating device, and produces a filter.

Example 2

Polyvinylidene fluoride with weight average molecular weight of 50,000 is dissolved in N,N-Dimethylacetamide(DMAc) and produces spinning solution, and it is inserted in a spinning solution main tank of each unit of the electrospinning apparatus. In a first unit of the electrospinning apparatus, applied voltage is provided 15kV, on a first cellulose substrate, electrospinning the spinning solution, and laminating formed a first polyvinylidene fluoride nanofiber non-woven fabric with thickness of $2.5\mu$m and fiber diameter of 250nm. In a second unit, applied voltage is provided 20kV, electrospinning the spinning solution on the first polyvinylidene fluoride nanofiber non-woven fabric, and laminating formed a second polyvinylidene fluoride nanofiber non-woven fabric with thickness of $2.5\mu$m and fiber diameter of 130nm. After going through the unit, in a laminating device located in the rear-end of the electrospinning apparatus, after laminating a second cellulose substrate on the second polyvinylidene fluoride nanofiber non-woven fabric, thermosetting in a laminating device, and produces a filter. In this case, for electrospinning conditions, spinning solution flow rate is 0.1mL/h, temperature 22°C, and humidity 20%.

Example 3

Polyvinylidene fluoride with weight average molecular weight of 50,000 and polyvinylidene fluoride resin for hot melt with number average molecular weight of 3,000 is dissolved in N,N-Dimethylacetamide(DMAc) and produces spinning solution, and it is inserted in a spinning solution main tank of each unit of the electrospinning apparatus. In each unit, on a first cellulose substrate, the spinning solution is consecutively electrospinning in conditions of distance between an electrode and a collector is 40cm, applied voltage 20kV, spinning solution flow rate is 0.1mL/h, temperature 22°C, and humidity 20%, and laminating formed polyvinylidene fluoride - hot melt nanofiber non-woven fabric with thickness of $3\mu$m. In a laminating device located in the rear-end of the electrospinning apparatus, a second cellulose substrate is laminated on polyvinylidene fluoride - hot melt nanofiber non-woven fabric laminating formed on the first cellulose substrate, thermosetting in a laminating device, and produces a filter.

Example 4

Polyvinylidene fluoride resin for hot melt with number average molecular weight of 3,000 is dissolved in N,N-Dimethylformamide(DMF) of 8weight% and produces hot melt solution, and it is inserted in a spinning solution main tank of a first and third unit of the electrospinning apparatus. Polyvinylidene fluoride with weight average molecular weight of 50,000 is dissolved in N,N-Dimethylacetamide(DMAc) and produces polyvinylidene fluoride solution, and it is inserted in a spinning solution main tank of a second unit of the electrospinning apparatus. In a first unit of the electrospinning apparatus, on a first cellulose substrate, electrospinning the hot melt solution, and laminating formed a first hot melt electrospinning layer of thickness of $1 \mu$m. In a second unit, on the first hot melt electrospinning layer, electrospinning the polyvinylidene fluoride solution, and laminating formed polyvinylidene fluoride nanofiber non-woven fabric. In a third unit, on the polyvinylidene fluoride nanofiber non-woven fabric, electrospinning the hot melt solution, and laminating formed a second hot melt electrospinning layer. In a laminating device located in the rear-end of the electrospinning apparatus, on the second hot melt electrospinning layer, adhering a second cellulose substrate, thermosetting in a laminating device, and produces a filter. In this case, for electrospinning conditions, spinning solution flow rate is 0.1mL/h, temperature 22°C, and humidity 20%.

Comparative Example 1

The cellulose substrate used in example 1 is used as filter medium.

Comparative Example 2

A filter is produced by laminating forming polyvinylidene fluoride nanofiber non-woven fabric which electrospun polyvinylidene fluoride on a cellulose substrate.

- Filtering efficiency measurement

In order to measure efficiency of the produced nanofiber filter, DOP test method is used. DOP test method measures dioctylphthalate(DOP) efficiency by an automated filter analyzer (AFT) of TSI 3160 of TSI Incorporated, and it can measure a filter media material permeability, filter efficiency, and pressure difference.
The automated analyzer makes DOP in a desired size particle, penetrates on a filter sheet, and automatically measure air speed, DOP filtering efficiency, air permeability in coefficient method, and it is a very important device in high efficiency filter.
DOP % efficiency is defined as follows.

$$DOP~\%~transmissivity = 1 - 100(lower~DOP~concentration/~upper~DOP~concentration)$$

Filtering efficiency of example 1 to 4 and comparative example 1 is measured by the method as described above, and it is shown in Table 1.

[Table 1]

|  | Example 1 | Example 2 | Example 3 | Example 4 | Comparative Example 1 |
|---|---|---|---|---|---|
| $0.35 \mu$m DOP Filtering efficiency(%) | 92 | 91 | 92 | 93 | 63 |

As described above, a filter comprising polyvinylidene fluoride nanofiber non-woven fabric produced through an embodiment of the present invention is excellent in filtering efficiency compared to comparative example 1.

- Pressure drop and filter sustainability measurement

The produced nanofiber non-woven fabric filter is measured pressure drop by ASHRAE 52.1 according to flow rate of 50/ m$^3$, and measures filter sustainability according to this. Table 2 shows data comparing example 1 to 4 and comparative example 1.

[Table 2]

|  | Example 1 | Example 2 | Example 3 | Example 4 | Comparative Example 1 |
|---|---|---|---|---|---|
| Pressure drop (in.w.g) | 4.2 | 4.1 | 4.3 | 4.0 | 5.2 |
| Filter | 6.3 | 6.1 | 6.1 | 6.3 | 3.8 |
| sustainablity (month) |  |  |  |  |  |

According to Table 2, a filter produced through an embodiment of the present invention, compared to comparative example, has low pressure drop which results in low pressure lose and has longer filter sustainability which results in excellence in durability.

- Desorption of nanofiber non-woven fabric

In result of measuring whether desorption or not of nanofiber non-woven fabric and a filter substrate of the produced filter by ASTM D 2724 method, in a filter produced by example 3 and 4 does not occur desorption of nanofiber non-woven fabric, but a filter produced by comparative example 2 occurs desorption of nanofiber non-woven fabric.

Therefore, a filter produced through an embodiment of the present invention, compared to comparative example, does not occur desorption between nanofiber non-woven fabric and a substrate.

Meanwhile, in an embodiment of the present invention, for substrate, a cellulose substrate is used, or a bicomponent substrate can be used, and for polymer spinning solution, spinning solution which mixed plyvinylidene fluoride and hot melt can be used. Fiber forming polymer of a bicomponent substrate used in an embodiment can be polyester comprising polyethylene terephthalate, polyethylene naphthalate, polypropylene terephthalate, and polybutylene terephthalate, and polypropylene terephthalate also is polybutylene terephthalte such as polytrimethylene terephthalte and polytetramethylene terephthalte.

A bicomponent substrate of an embodiment of the present invention is most preferably polyethylene terephthalate combined two components of different melting point. The polyethylene terephthalate bicomponent substrate can be classified as Sheath-Core, Side-by-Side, and C-Type. Among them, in the case of Sheath-Core type bicomponent substrate, Sheath part is a low melting point polyethylene terephthalate, and core part comprises generally polyethylene terephthalte. Here, the sheath part is approximately 10 to 90 weight%, and the core part comprises approximately 90 to 10 weight%. The sheath part acts as thermal bonding agent forming the outer surface of binder fiber, having a melting point of approximately 80 to 150°C, and the core part having a melting point of approximately 160 to 250°C. A Sheath-Core type bicomponent substrate used in an embodiment of the present invention, in the sheath part for a conventional melting point analyzer, comprising non-crystalline polyester copolymer not showing a melting point, and for the core part, it is preferably heat-adhesive composite fiber using relatively high melting point component.

Polyester copolymer included in sheath part is copolymer polyester made of polyethylene terephthalte unit in 50 to 70mol%. Isophthalic acid is preferably for copolymer acid component in 30 to 50mol%, but conventional dicarboxylic acid is all possible.

For a high melting point component used in core part, polymer with a melting point of 160°C or more is preferable, for example, polyethylene terephthalate, polybutylene terephthalate, polyamide, polyethylene terephthalate copolymer, and polypropylene. Basis weight of the bicomponent used in an embodiment of the present invention is preferably 10 to 50g/m$^2$. Also, for the hot melt, polyvinylidene fluoride group hot melt is preferable.

Meanwhile, in order to produce a filter of an embodiment of the present invention, it is produced according to the manufacturing method as described above, for a substrate, a bicomponent is applied, and between the bicomponent substrates, spinning solution which mixed polyvinylidene fluoride and hot melt is electrospun, and by forming polyvinylidene fluoride - hot melt nanofiber non-woven fabric, produces a filter.

After laminating forming polyvinylidene fluoride nanofiber - hot melt non-woven fabric in each unit(10a, 10b) according to the method as described above, in a laminating device(100) located in the rear-end of the electrospinning apparatus(1), on the polyvinylidene fluoride - hot melt nanofiber non-woven fabric, a second bicomponent substrate is laminated, and going through a process of thermosetting in a laminating device(90), produces a filter. Here, by differing voltage of each unit(10a, 10b), laminating forming two layers of polyvinylidene fluoride - hot melt nanofiber non-woven fabric with different diameter of laminating formed polyvinylidene fluoride - hot melt nanofiber non-woven fabric.

Example 5

Polyvinylidene fluoride with weight average molecular weight of 50,000 and polyvinylidene fluoride resin for hot melt with number average molecular weight of 3,000 is dissolved in N,N-Dimethylacetamide(DMAc) and produces spinning solution, and it is inserted in a spinning solution main tank of each unit of the electrospinning apparatus. In each unit, on a first bicomponent substrate, the spinning solution is consecutively electrospinning in conditions of distance between an electrode and a collector is 40cm, applied voltage 20kV, spinning solution flow rate is 0.1mL/h, temperature 22°C, and humidity 20%, and laminating formed polyvinylidene fluoride - hot melt nanofiber non-woven fabric with thickness of $3\mu$m. In a laminating device located in the rear-end of the electrospinning apparatus, a second bicomponent substrate is laminated on polyvinylidene fluoride - hot melt nanofiber non-woven fabric laminating formed on the first cellulose substrate, thermosetting in a laminating device, and produces a filter. In this case, basis weight of the bicomponent substrate is 30g/m$^2$.

Example 6

Polyvinylidene fluoride with weight average molecular weight of 50,000 and polyvinylidene fluoride resin for hot melt with number average molecular weight of 3,000 is dissolved in N,N-Dimethylacetamide(DMAc) and produces spinning solution, and it is inserted in a spinning solution main tank of each unit of the electrospinning apparatus. In a first unit of the electrospinning apparatus, applied voltage is provided 15kV, on a first bicomponent substrate, electrospinning the spinning solution, and laminating formed a first polyvinylidene fluoride - hot melt nanofiber non-woven fabric with thickness of $2\mu$m and fiber diameter of 250nm. In a second unit, applied voltage is provided 20kV, electrospinning the spinning solution on the first polyvinylidene fluoride hot melt nanofiber non-woven fabric, and laminating formed a second polyvinylidene fluoride - hot melt nanofiber non-woven fabric with thickness of $2\mu$m and fiber diameter of 130nm. After going through the unit, in a laminating device located in the rear-end of the electrospinning apparatus, after laminating a second bicomponent substrate on the second polyvinylidene fluoride - hot melt nanofiber non-woven fabric, thermosetting in a laminating device, and produces a filter. In this case, for electrospinning conditions, spinning solution flow rate is 0.1mL/h, temperature 22°C, and humidity 20%. Also, in this case, basis weight of the bicomponent substrate is 30g/m$^2$.

Comparative Example 3

The first bicomponent substrate used in example 5 is used as filter medium.

Comparative Example 4

A filter is produced by laminating forming polyvinylidene fluoride nanofiber non-woven fabric which electrospun polyvinylidene fluoride on a polyethylene terephthalate substrate.

Filtering efficiency of example 5 and 6 and comparative example 3 is measured by the method as described above, and it is shown in Table 3.

[Table 3]

|  | Example 5 | Example 6 | Comparative Example 3 |
|---|---|---|---|
| 0.35$\mu$m DOP Filtering efficiency(%) | 92 | 91 | 63 |

As described above, a filter comprising polyvinylidene fluoride nanofiber non-woven fabric produced through example 5 and 6 of the present invention is excellent in filtering efficiency compared to comparative example 3.

Pressure drop and filter sustainability of the example 5 and 6 and comparative example 3 are measured according to the measuring method and shown in Table 4.

[Table 4]

|  | Example 5 | Example 6 | Comparative Example 3 |
|---|---|---|---|
| Pressure drop (in.w.g) | 4.1 | 4.0 | 5.2 |
| Filter sustainability (month) | 6.1 | 6.3 | 3.8 |

According to Table 4, a filter produced through example 5 and 6, compared to comparative example 3, has low pressure drop which results in low pressure lose and has longer filter sustainability which results in excellence in durability.

In result of measuring whether desorption or not of nanofiber non-woven fabric and a filter substrate of nanofiber non-woven fabric of produced filter according to example 5 and 6, in a filter produced by example 5 and 6 does not occur desorption of nanofiber non-woven fabric, but a filter produced by comparative example 4 occurs desorption of nanofiber non-woven fabric.

Meanwhile, in an embodiment of the present invention, for substrate, a cellulose substrate is used, and for nanofiber non-woven fabric, polyvinylidene fluoride nanofiber non-woven fabric is used, in another embodiment of the present invention, for substrate, polyethylene terephthalte(PET) substrate is used, and for nanofiber non-woven fabric, a high melting point and low melting point polyvinylidene fluoride nanofiber non-woven fabric can be used. Here, the low melting point polyvinylidene fluoride non-woven fabric plays a role as a bonding layer between a substrate and a high melting point polyvinylidene fluoride nanofiber non-woven fabric, and has effects of preventing desorption of nanofiber.

In order to produce a filter of an embodiment the present invention, produced by the method as described above, first, low melting point polyvinylidene fluoride and high melting point polyvinylidene fluoride are mixed, and dissolved in organic solvent, produces polyvinylidene fluoride solution which is provided to a spinning solution main tank(8) connected to each unit(10a, 10b) of the electrospinning apparatus, and polyvinylidene fluoride solution provided to the spinning solution main tank(8) is consecutively and quantitatively provided in a plurality of nozzle(12) of a nozzle block(11) provided high voltage through a metering pump(not shown). Polyvinylidene fluoride solution provided from each of the nozzle(12) electrospun and line-focused on a first polyethylene terephthalate substrate located on a collector(13) flowing high voltage through a nozzle(12), and laminating forming high melting point and low melting point polyvinylidene fluoride nanofiber non-woven fabric.

Also, in the process of electrospinning and laminating forming the polyvinylidene fluoride solution on a first polyethylene terephthalate substrate, by differing spinning conditions according to each unit(10a, 10b) of the electrospinning apparatus, a high melting point and low melting point polyvinylidene fluoride nanofiber non-woven fabric with large fiber diameter in a first unit(10a) is laminating formed, and high melting point and low melting point polyvinylidene fluoride nanofiber non-woven fabric with small diameter in a second unit(10b) can be consecutively laminating formed. In order to provide grade of fiber diameter, a method of differing voltage intensity provided to each unit(10a, 10b) is possible, and by adjusting space between a nozzle(12) and a collector(13), nanofiber non-woven fabric with different fiber diameter can be formed.

According to the method as described above, after laminating forming high melting point and low melting point polyvinylidene fluoride nanofiber non-woven fabric on a first polyethylene terephthalate substrate in each unit(10a, 10b), a second polyethylene terephthalte substrate is laminated on one side of the polyvinylidene fluoride nanofiber non-woven fabric in a laminating device(100) located in the rear-end of the electrospinning apparatus(1), goes through a process of thermosetting in a laminating device(90), and produces a filter.

Example 7

High melting point polyvinylidene fluoride with weight average molecular weight of 50,000 and low melting point polyvinylidene fluoride with weight average molecular weight of 5,000 is dissolved in N,N-Dimethylacetamide(DMAc) and produces spinning solution, and it is inserted in a spinning solution main tank of each unit of the electrospinning apparatus. In each unit, on a first polyethylene terephthalate substrate, the spinning solution is consecutively electrospinning in conditions of distance between an electrode and a collector is 40cm, applied voltage 20kV, spinning solution flow rate is 0.1mL/h, temperature 22°C, and humidity 20%, and laminating formed high melting point and low melting point polyvinylidene fluoride nanofiber non-woven fabric with thickness of $3\mu$m. In a laminating device located in the rear-end of the electrospinning apparatus, a second polyethylene terephthalte substrate is laminated on high melting point and low melting point polyvinylidene fluoride nanofiber non-woven fabric laminating formed on the first polyethylene terephthalte substrate, thermosetting in a laminating device, and produces a filter. In this case, basis weight of the polyethylene terephthalate substrate is 260g/m$^2$.

Example 8

High melting pint polyvinylidene fluoride with weight average molecular weight of 50,000 and low melting point polyvinylidene with weight average molecular weight of 5,000 is dissolved in N,N-Dimethylacetamide(DMAc) and produces spinning solution, and it is inserted in a spinning solution main tank of each unit of the electrospinning apparatus. In a first unit of the electrospinning apparatus, applied voltage is provided 15kV, on a first polyethylene terephthalte substrate, electrospinning the spinning solution, and laminating formed a first high melting point and low melting point polyvinylidene fluoride nanofiber non-woven fabric with thickness of $2\mu$m and fiber diameter of 250nm. In a second unit, applied voltage is provided 20kV, electrospinning the spinning solution on the first high melting point and low melting point polyvinylidene fluoride nanofiber non-woven fabric, and laminating formed a second high melting point and low melting point polyvinylidene fluoride nanofiber non-woven fabric with thickness of $2\mu$m and fiber diameter of 130nm. After going through the unit, in a laminating device located in the rear-end of the electrospinning apparatus, after laminating a second polyethylene terephthalate substrate on the second high melting point and low melting point polyvinylidene fluoride nanofiber non-woven fabric, thermosetting in a laminating device, and produces a filter. In this case, for electrospinning conditions, spinning solution flow rate is 0.1mL/h, temperature 22°C, and humidity 20%. Also, basis weight of the polyethylene terephthalate substrate is 260g/m$^2$.

Comparative Example 5

The first polyethylene terephthalate substrate used in example 7 is used as filter medium.

Comparative Example 6

By laminating forming polyvinylidene fluoride nanofiber non-woven fabric which electrospun polyvinylidene fluoride on polyethylene terephthalate substrate, and a filter is produced. Filtering efficiency of a produced filter according to the example 7 and 8 and comparative example 5 is measured by the filtering efficiency measuring method and it is shown in Table 5.

[Table 5]

|  | Example 7 | Example 8 | Comparative Example 5 |
|---|---|---|---|
| 0.35$\mu$m DOP Filtering efficiency(%) | 90 | 91 | 63 |

As described above, a filter produced through example 7 and 8, compared to comparative example 5, is excellent in filtering efficiency.

Pressure drop and filter sustainability of a filter produced by the example 7 and 8 and comparative example 5 are measured by the pressure drop and filter sustainability measuring method and shown in Table 6.

[Table 6]

|  | Example 7 | example 8 | Comparative example 5 |
|---|---|---|---|
| Pressure drop (in.w.g) | 4.2 | 4.1 | 5.2 |
| Filter sustainability (month) | 6.0 | 6.2 | 3.8 |

According to Table 6, a filter produced through example 7 and 8, compared to comparative example 5, has low pressure drop which results in low pressure lose and has longer filter sustainability which results in excellence in durability.

In result of measuring whether desorption or not of nanofiber non-woven fabric and a filter substrate of nanofiber non-woven fabric of produced filter by the measuring method according to example 7 and 8 and comparative example 6, in a filter produced by example 7 and 8 does not occur desorption of nanofiber non-woven fabric, but a filter produced by comparative example 6 occurs desorption of nanofiber non-woven fabric.

Meanwhile, in an embodiment of the present invention, for substrate, a cellulose substrate is used, and in another embodiment of the present invention, for substrate, a general substrate is used, and for polymer, polyurethane and polyvinylidene fluoride can be used. Here, the general substrate comprises one or more selected from a cellulose substrate, a polyethylene terephthalate substrate, synthetic fiber, natural fiber, and etc. Polyurethane and polyvinylidene fluoride used as the polymer are mixed and dissolved in solvent and used as spinning solution in electrospinning.

In order to produce a filter of an embodiment the present invention, produced by the method as described above, first, polyurethane and polyvinylidene fluoride and are mixed, and dissolved in organic solvent, produces spinning solution which is provided to a spinning solution main tank(8) connected to each unit(10a, 10b) of the electrospinning apparatus, and spinning solution provided to the spinning solution main tank(8) is consecutively and quantitatively provided in a plurality of nozzle(12) of a nozzle block(11) provided high voltage through a metering pump(not shown). Spinning solution provided from each of the nozzle (12) electrospun and line-focused on a first substrate located on a collector(13) flowing high voltage through a nozzle(12), and laminating forming polyurethane and polyvinylidene fluoride nanofiber non-woven fabric. Here, by differing voltage intensity of each unit, polyurethane and polyvinylidene fluoride nanofiber non-woven fabric with different fiber diameter can be formed.

According to the method as described above, after laminating forming polyurethane and polyvinylidene fluoride nanofiber non-woven fabric on a first substrate in each unit(10a, 10b), a second substrate is laminated on the polyurethane and polyvinylidene fluoride nanofiber non-woven fabric in a laminating device(100) located in the rear-end of the electrospinning apparatus(1), goes through a process of thermosetting in a laminating device(90), and produces a filter.

Example 9

Polyurethane and polyvinylidene fluoride with weight average molecular weight of 50,000 are dissolved in N,N-Dimethylacetamide(DMAc) and produces spinning solution, and it is inserted in a spinning solution main tank of each of the electrospinning apparatus. In each unit, electrospinning the spinning solution on a first polyethylene terephthalate substrate with basis weight of 150g/m$^2$, and laminating formed polyurethane and polyvinylidene fluoride mixed nanofiber non-woven fabric of thickness of 3$\mu$m. In a laminating device located in the rear-end of the electrospinning apparatus, on the polyurethane and polyvinylidene fluoride mixed nanofiber non-woven fabric, laminated upper side of a second polyethylene terephthalate substrate with basis weight of 150g/m$^2$. In a laminating device, thermosetting multi-layered non-woven fabric laminated in order of a first polyethylene terephthalate substrate, polyurethane and polyvinylidene fluoride mixed nanofiber non-woven fabric, and a second polyethylene terephthalate substrate, and produces a filter. In this case, electrospinning is performed in conditions of distance between an electrode and a collector is 40cm, applied voltage is 20kV, spinning solution flow rate is O.lmL/h, temperature 22°C, and humidity 20%.

Comparative Example 7

The first polyethylene terephthalate substrate used in example 9 is used as filter medium.

Comparative Example 8

By laminating forming polyvinylidene fluoride nanofiber non-woven fabric which electrospun polyvinylidene fluoride on a polyethylene terephthalate substrate, a filter is produced.
Filtering efficiency of a filter produced by the example 9 and comparative example 7 is measured according to the filtering efficiency measuring method and shown in Table 7.

[Table 7]

|  | Example 9 | Comparative example 7 |
|---|---|---|
| 0.35$\mu$m DOP Filtering efficiency(%) | 91 | 63 |

Also, pressure drop and filter sustainability of a filter produced by the example 9 and comparative example 7 are measured according to the measuring method and shown in Table 8.

[Table 8]

|  | Example 9 | Comparative Example 7 |
|---|---|---|
| Pressure drop (in.w.g) | 4.2 | 5.2 |
| Filter sustainability (month) | 6.3 | 3.8 |

As described above, a filter produced by example 9 of the present invention, compared to comparative example 7, is excellent in filtering efficiency. Also, according to Table 8, a filter produced by the example 9, compared to comparative example 7, has lower pressure drop which results in less pressure loss, and longer filter sustainability which results in excellence in durability.
In result of measuring whether desorption or not of nanofiber non-woven fabric of a filter produced according to the example 9 and comparative example 8, in a filter produced by example 9 does not occur desorption of nanofiber non-woven fabric, but a filter produced by comparative example 8 occurs desorption of nanofiber non-woven fabric.
Meanwhile, in an embodiment of the present invention, for substrate, a cellulose substrate is used, in another embodiment of the present invention, a substrate comprising a bicomponent substrate laminated on a PET substrate can be used. In order to produce a filter of an embodiment the present invention, produced by the method as described above, first, polyvinylidene fluoride is dissolved in organic solvent, produces polyvinylidene fluoride solution which is provided to a spinning solution main tank(8) connected to each unit(10a, 10b) of the electrospinning apparatus, and polyvinylidene fluoride solution provided to the spinning solution main tank(8) is consecutively and quantitatively provided in a plurality of nozzle(12) of a nozzle block(11) provided high voltage through a metering pump(not shown). Polyvinylidene fluoride solution provided from each of the nozzle(12) electrospun and line-focused on a first polyethylene terephthalate substrate located on a collector(13) flowing high voltage through a nozzle(12), and laminating forming polyvinylidene fluoride nanofiber non-woven fabric.

Also, in the process of electrospinning and laminating forming the polyvinylidene fluoride solution on a first bicomponent substrate, by differing spinning conditions according to each unit(10a, 10b) of the electrospinning apparatus, polyvinylidene fluoride nanofiber non-woven fabric with large fiber diameter in a first unit(10a) is laminating formed, and polyvinylidene fluoride nanofiber non-woven fabric with small diameter in a second unit(10b) can be consecutively laminating formed.

According to the method as described above, after laminating forming polyvinylidene fluoride nanofiber non-woven fabric in each unit(10a, 10b), in a laminating device(100) located in the rear-end of the electrospinning apparatus(1), one side of a bicomponent substrate laminated on a second polyethylene terephthalate substrate is laminated in opposite side with one side of the polyvinylidene fluoride nanofiber non-woven fabric, goes through a process of thermosetting in a laminating device(90), and produces a filter.

Example 10

High melting point polyvinylidene fluoride with weight average molecular weight of 50,000 and low melting point polyvinylidene fluoride with weight average molecular weight of 5,000 are dissolved in N,N-Dimethylacetamide(DMAc) and produces spinning solution, and it is inserted in a spinning solution main tank of each of the electrospinning apparatus. In each unit, electrospinning the spinning solution on a first bicomponent substrate with basis weight of $30g/m^2$ laminated on a first polyethylene terephthalte substrate with basis weight of $150g/m^2$, and laminating formed polyvinylidene fluoride nanofiber non-woven fabric of thickness of $3\mu m$. In a laminating device located in the rear-end of the electrospinning apparatus, on the polyvinylidene fluoride nanofiber non-woven fabric, laminated upper side of a second bicomponent substrate with basis weight of $30g/m^2$ laminated on a second polyethylene terephthalate substrate with basis weight of $150g/m^2$. In a laminating device, thermosetting multi-layered non-woven fabric laminated in order of a first polyethylene terephthalate substrate, a bicomponent, polyvinylidene fluoride nanofiber non-woven fabric, a second bicomponent substrate, and a second polyethylene terephthalate substrate, and produces a filter. In this case, electrospinning is performed in conditions of distance between an electrode and a collector is 40cm, applied voltage is 20kV, spinning solution flow rate is 0.1mL/h, temperature 22°C, and humidity 20%.

Example 11

High melting point polyvinylidene fluoride with weight average molecular weight of 50,000 and low melting point polyvinylidene fluoride with weight average molecular weight of 5,000 are dissolved in N,N-Dimethylacetamide(DMAc) and produces spinning solution, and it is inserted in a spinning solution main tank of each unit of the electrospinning apparatus. In each unit, after laminating a first bicomponent substrate with basis weight of $30g/m^2$ laminated on a first polyethylene terephthalte substrate with basis weight of $150g/m^2$, and located on a collector of the electrospinning apparatus. In a first unit of the electrospinning apparatus, applied voltage is provided 15kV, electrospinning the spinning solution on the first bicomponent substrate, and laminating formed a first polyvinylidene fluoride nanofiber non-woven fabric with thickness of $3\mu m$ and fiber diameter of 250nm. In the second unit of the electrospinning apparatus, applied voltage is provided 20kV, electrospinning the spinning solution on the first polyvinylidene fluoride nanofiber non-woven fabric, and laminating formed a second polyvinylidene fluoride nanofiber non-woven fabric of thickness of $3\mu m$ and fiber diameter of 130nm. In a laminating device located in the rear-end of the electrospinning apparatus, on a second polyethylene terephthalate substrate with basis weight of $150g/m^2$, laminated upper side of a second bicomponent substrate with basis weight of $30g/m^2$ and upper side of the second polyvinylidene fluoride nanofiber non-woven fabric. In a laminating device, thermosetting multi-layered non-woven fabric laminated in order of a first polyethylene terephthalate substrate, a first bicomponent, a first polyvinylidene fluoride nanofiber non-woven fabric, a second polyvinylidene fluoride nanofiber non-woven fabric, a second bicomponent, and a second polyethylene terephthalate substrate, and produces a filter. In this case, electrospinning is performed in conditions of distance between an electrode and a collector is 40cm, spinning solution flow rate is 0.1mL/h, temperature 22°C, and humidity 20%.

Comparative Example 9

Polyethylene terephthalate substrate used in example 10 is used as filter medium.

Comparative Example 10

By laminating forming polyvinylidene fluoride nanofiber non-woven fabric which electrospun polyvinylidene fluoride on polyethylene terephthalate, and a filter is produced.

Filtering efficiency of the example 10 and 11 and comparative example 9 is measured by the filtering efficiency measuring method and shown in Table 9.

[Table 9]

|  | Example 10 | Example 11 | Comparative example 9 |
|---|---|---|---|
| 0.35$\mu$m DOP Filtering efficiency(%) | 92 | 94 | 63 |

As described above, a filter produced by example 10 and 11, compared to comparative example 9, is excellent in filtering efficiency.

Also, pressure drop and filter sustainability of a filter produced by the example 10 and 11 and comparative example 9 are measured and shown in Table 10.

[Table 10]

|  | Example 10 | Example 11 | Comparative example 9 |
|---|---|---|---|
| Pressure drop (in.w.g) | 4.4 | 4.5 | 5.2 |
| Filter sustainability (month) | 6.3 | 6.2 | 3.8 |

According to Table 10, a filter produced by example 10 and 11, compared to comparative example 9, has low pressure drop which results less pressure loss, and longer filter sustainability which results in excellence in durability.

In result of measuring whether desorption or not of nanofiber non-woven fabric and a filter substrate of a filter produced by the measuring method according to the example 10 and 11 and comparative example 10, in a filter produced by example 10 and 11 does not occur desorption of nanofiber non-woven fabric, but a filter produced by comparative example 10 occurs desorption of nanofiber non-woven fabric.

Meanwhile, in an embodiment of the present invention, for substrate, a cellulose substrate is used, in another embodiment of the present invention, a substrate comprising a bicomponent substrate laminated on a PET substrate can be used, and for polymer, mixing high melting point polyvinylidene fluoride and low melting point polyvinylidene fluoride can be used.

In order to produce a filter of an embodiment the present invention, produced by the method as described above, first, low melting point polyvinylidene fluoride and high melting point polyvinylidene fluoride are mixed, and it is dissolved in organic solvent, produces polyvinylidene fluoride solution which is provided to a spinning solution main tank(8) connected to each unit(10a, 10b) of the electrospinning apparatus, and polyvinylidene fluoride solution provided to the spinning solution main tank(8) is consecutively and quantitatively provided in a plurality of nozzle(12) of a nozzle block(11) provided high voltage through a metering pump(not shown). Polyvinylidene fluoride solution provided from each of the nozzle(12) electrospun and line-focused on a first bicomponent laminated on a first polyethylene terephthalate substrate located on a collector(13) flowing high voltage through a nozzle(12), and laminating forming high melting point and low melting point polyvinylidene fluoride nanofiber non-woven fabric.

Also, in the process of electrospinning and laminating forming the polyvinylidene fluoride solution on a first bicomponent substrate, by differing spinning conditions according to each unit(10a, 10b) of the electrospinning apparatus, polyvinylidene fluoride nanofiber non-woven fabric with large fiber diameter in a first unit(10a) is laminating formed, and high melting point and low melting point polyvinylidene fluoride nanofiber non-woven fabric with small diameter in a second unit(10b) can be consecutively laminating formed.

According to the method as described above, after laminating forming high melting point and low melting point polyvinylidene fluoride nanofiber non-woven fabric in each unit(10a, 10b), in a laminating device(100) located in the rear-end of the electrospinning apparatus(1), one side of a bicomponent substrate laminated on a second polyethylene terephthalate substrate is laminated in opposite side with one side of the high melting point and low melting point polyvinylidene fluoride nanofiber non-woven fabric, goes through a process of thermosetting in a laminating device(90), and produces a filter.

Example 12

High melting point polyvinylidene fluoride with weight average molecular weight of 50,000 and low melting point polyvinylidene fluoride with weight average molecular weight of 5,000 are dissolved in N,N-Dimethylacetamide(DMAc) and produces spinning solution, and it is inserted in a spinning solution main tank of each of unit the electrospinning apparatus. In each unit, electrospinning the spinning solution on a first bicomponent substrate with basis weight of 30g/m$^2$ laminated on a first polyethylene terephthalte substrate with basis weight of 150g/m$^2$, laminating formed high melting point and low melting point polyvinylidene fluoride nanofiber non-woven fabric of thickness of 3$\mu$m. In a laminating device located in the rear-end of the electrospinning apparatus, on the high melting point and low melting point polyvinylidene fluoride nanofiber non-woven fabric, laminated upper side of a second bicomponent substrate with basis weight of 30g/m$^2$ laminated on a second polyethylene terephthalate substrate with basis weight of 150g/m$^2$. In a laminating device, thermosetting multi-layered non-woven fabric laminated in order of a first polyethylene terephthalate substrate, a first bicomponent substrate, high melting point and low melting point polyvinylidene fluoride nanofiber non-woven fabric, a second bicomponent, and a second polyethylene terephthalate substrate, and produces a filter. In this case, electrospinning is performed in conditions of distance between an electrode and a collector is 40cm, applied voltage is 20kV, spinning solution flow rate is 0.1mL/h, temperature 22°C, and humidity 20%.

Example 13

High melting point polyvinylidene fluoride with weight average molecular weight of 50,000 and low melting point polyvinylidene fluoride with weight average molecular weight of 5,000 are dissolved in N,N-Dimethylacetamide(DMAc) and produces spinning solution, and it is inserted in a spinning solution main tank of each unit of the electrospinning apparatus. After laminating a first bicomponent substrate with basis weight of 30g/m$^2$ on a first polyethylene terephthalate substrate with basis weight of 150g/m$^2$, located on a collector of the electrospinning apparatus. In a first unit of the electrospinning apparatus, applied voltage is provided 15kV, on the first bicomponent substrate, electrospinning the spinning solution, and laminating formed a first high melting point and low melting point polyvinylidene fluoride nanofiber non-woven fabric with thickness of 3$\mu$m and fiber diameter of 250nm. In a second unit, applied voltage is provided 20kV, electrospinning the spinning solution on the first high melting point and low melting point polyvinylidene fluoride nanofiber non-woven fabric, and laminating formed a second high melting point and low melting point polyvinylidene fluoride nanofiber non-woven fabric with thickness of 3$\mu$m and fiber diameter of 130nm. In a laminating device located in the rear-end of the electrospinning apparatus, on a second polyethylene terephthalte substrate with basis weight of 150g/m$^2$, upper side of a second bicomponent substrate with basis weight of 30g/m$^2$ and upper side of the second high melting point and low melting point polyvinylidene fluoride nanofiber non-woven fabric are laminated. In a laminating device, thermosetting multi-layered non-woven fabric laminated in order of a first polyethylene terephthalate substrate, a first bicomponent, a first and a second high melting point and low melting point polyvinylidene fluoride nanofiber non-woven fabric, a second bicomponent substrate, and a second polyethylene terephthalate substrate, and produces a filter. In this case, electrospinning is performed in conditions of distance between an electrode and a collector is 40cm, spinning solution flow rate is 0.1mL/h, temperature 22°C, and humidity 20%.

Comparative Example 11

The polyethylene terephthalate substrate used in example 12 is used as filter medium.

Comparative Example 12

By laminating forming polyvinylidene fluoride nanofiber non-woven fabric which electrospun polyvinylidene fluoride on a polyethylene terephthalate substrate, a filter is produced. Filtering efficiency of the example 12 and 13 and comparative example 11 is measured by the filtering efficiency measuring method and shown in Table 11.

[Table 11]

| | Example 12 | Example 13 | Comparative Example 11 |
|---|---|---|---|
| 0.35$\mu$m DOP Filtering efficiency(%) | 92 | 94 | 63 |

As described above, a filter produced by example 12 and 13 of the present invention, compared to comparative example 11, is excellent in filtering efficiency.

Also, pressure drop and filter sustainability of a filter produced by the example 12 and 13 and comparative example 11 are measured and shown in Table 12.

[Table 12]

| | Example 12 | Example 13 | Comparative example 11 |
|---|---|---|---|
| Pressure drop (in.w.g) | 4.4 | 4.5 | 5.2 |
| Filter sustainability (month) | 6.3 | 6.2 | 3.8 |

According to Table 12, a filter produced by example 12 and 13 of the present invention, compared to comparative example 11, has low pressure drop which results in less pressure loss, and longer filter sustainability which results in excellence in durability.

In result of measuring whether desorption or not of nanofiber non-woven fabric and a filter substrate of filter produced by example 12 and 13 and comparative example 12 according to the measuring method, in a filter produced by example 12 and 13 does not occur desorption of nanofiber non-woven fabric, but a filter produced by comparative example 12 occurs desorption of nanofiber non-woven fabric.

Meanwhile, in an embodiment of the present invention, for substrate, a cellulose substrate is used, and in another embodiment of the present invention, a substrate comprising a bicomponent substrate laminated on a PET substrate can be used, and for polymer, nylon can be used. Here, the nylon comprises nylon 6, nylon 66, nylon 46, and nylon 12, etc.

In order to produce a filter of an embodiment the present invention, nylon is dissolved in organic solvent, produces nylon solution which is provided to a spinning solution main tank(8) connected to each unit(10a, 10b) of the electrospinning apparatus, and nylon solution provided to the spinning solution main tank(8) is consecutively and quantitatively provided in a plurality of nozzle(12) of a nozzle block(11) provided high voltage through a metering pump(not shown). Nylon solution provided from each of the nozzle(12) electrospun and line-focused on a first polyethylene terephthalate substrate located on a collector(13) flowing high voltage through a nozzle(12), and laminating forming nylon nanofiber non-woven fabric.

Also, in the process of electrospinning and laminating forming the nylon solution on a first bicomponent substrate, by differing spinning conditions according to each unit(10a, 10b) of the electrospinning apparatus, in a first unit(10a), nylon nanofiber non-woven fabric with large fiber diameter is laminating formed, and in a second unit(10b), nylon nanofiber non-woven fabric with small diameter can be consecutively laminating formed.

According to the method as described above, after laminating forming nylon nanofiber non-woven fabric in each unit(10a, 10b), in a laminating device(100) located in the rear-end of the electrospinning apparatus (1), one side of a second bicomponent substrate laminated on a second polyethylene terephthalate substrate is laminated in opposite side, goes through a process of thermosetting in a laminating device(90), and produces a filter.

Example 14

Nylon 6 with weight average molecular weight of 50,000 is dissolved in N,N-Dimethylacetamide(DMAc) and produces spinning solution, and it is inserted in a spinning solution main tank of each unit of the electrospinning apparatus. In each unit, electrospinning the spinning solution on a first bicomponent substrate with basis weight of $30g/m^2$ laminated on a first polyethylene terephthalate substrate with basis weight of $150g/m^2$, and laminating formed nylon 6 nanofiber non-woven fabric with thickness of $3\mu$m. In a laminating device located in the rear-end of the electrospinning apparatus, on the nylon 6 nanofiber non-woven fabric, laminated upper side of a second bicomponent substrate with basis weight of $30g/m^2$ laminated on a second polyethylene terephthalate substrate with basis weight of $150g/m^2$. In a laminating device, thermosetting multi-layered non-woven fabric laminated in order of a first polyethylene terephthalate substrate, a first bicomponent, nylon 6 nanofiber non-woven fabric, a second bicomponent substrate, and a second polyethylene terephthalate substrate, and produces a filter. In this case, electrospinning is performed in conditions of distance between an electrode and a collector is 40cm, applied voltage is 20kV, spinning solution flow rate is 0.1mL/h, temperature 22°C, and humidity 20%.

Example 15

Nylon 6 with weight average molecular weight of 50,000 is dissolved in N,N-Dimethylacetamide(DMAc) and produces spinning solution, and it is inserted in a spinning solution main tank of each unit of the electrospinning apparatus. After laminating a first bicomponent substrate with basis weight of $30g/m^2$ on a first polyethylene terephthalate substrate with basis weight of $150g/m^2$, located on a collector of the electrospinning apparatus. In a first unit of the electrospinning apparatus, applied voltage is provided 15kV, on the first bicomponent substrate, electrospinning the spinning solution, and laminating formed a first nylon 6 nanofiber non-woven fabric with thickness of $3\mu$m and fiber diameter of 250nm. In a second unit, applied voltage is provided(20kV), electrospinning the spinning solution on the first nylon 6 nanofiber non-woven fabric, and laminating formed a second nylon 6 nanofiber non-woven fabric with thickness of $3\mu$m and fiber diameter of 130nm. In a laminating device located in the rear-end of the electrospinning apparatus, on a second polyethylene terephthalte substrate with basis weight of $150g/m^2$, upper side of a second bicomponent substrate with basis weight of $30g/m^2$ and upper side of the second nylon 6 nanofiber non-woven fabric are laminated. In a laminating device, thermosetting multi-layered non-woven fabric laminated in order of a first polyethylene terephthalate substrate, a first bicomponent, a first nylon 6 nanofiber non-woven fabric, a second nylon 6 nanofiber non-woven fabric, a second bicomponent substrate, and a second polyethylene terephthalate substrate, and produces a filter. In this case, electrospinning is performed in conditions of distance between an electrode and a collector is 40cm, spinning solution flow rate is 0.1mL/h, temperature 22°C, and humidity 20%.

Comparative Example 13

The first polyethylene terephthalate substrate used in example 14 is used as filter medium.

Comparative Example 14

By laminating forming polyvinylidene fluoride nanofiber non-woven fabric which electrospun polyvinylidene fluoride on polyethylene terephthalate substrate, and produces a filter.
Filtering efficiency of the example 14 and 15 and comparative example 13 is measured according to the filtering efficiency measuring method and shown in Table 13.

[Table 13]

|  | Example 14 | Example 15 | Comparative example 13 |
|---|---|---|---|
| 0.35$\mu$m DOP Filtering efficiency (%) | 91 | 90 | 63 |

As described above, nylon nanofiber non-woven fabric and a filter comprising a bicomponent substrate produced by example 14 and 15, compared to comparative example 13, is excellent in filtering efficiency.
Also, pressure drop and filter sustainability of a filter produced by the example 14 and 15 and comparative example 13 are measured and shown in Table 14.

[Table 14]

|  | Example 14 | Example 15 | Comparative example 13 |
|---|---|---|---|
| Pressure drop (in.w.g) | 4.2 | 4.1 | 5.2 |
| Filter sustainability (month) | 6.2 | 6.3 | 3.8 |

According to Table 14, a filter produced by example 14 and 15 of the present invention, compared to comparative example 13, has low pressure drop which results in less pressure loss, and longer filter sustainability which results in excellence in durability.
In result of measuring whether desorption or not of nanofiber non-woven fabric and a filter substrate of filter produced by example 14 and 15 and comparative example 14 according to the measuring method, in a filter produced by example 14 and 15 does not occur desorption of nanofiber non-woven fabric, but a filter produced by comparative example 14 occurs desorption of nanofiber non-woven fabric.
Meanwhile, in an embodiment of the present invention, for substrate, a cellulose substrate is used, and in another embodiment of the present invention, a bicomponent substrate of two layers can be used, and for polymer, polyvinylidene fluoride can be used.
In order to produce a filter of an embodiment the present invention, polyvinylidene fluoride is dissolved in organic solvent, produces polyvinylidene fluoride solution which is provided to a spinning solution main tank(8) connected to each unit(10a, 10b) of the electrospinning apparatus, and polyvinylidene solution provided to the spinning solution main tank(8) is consecutively and quantitatively provided in a plurality of nozzle(12) of a nozzle block(11) provided high voltage through a metering pump(not shown). Polyvinylidene fluoride solution provided from each of the nozzle(12) electrospun and line-focused on a second bicomponent substrate laminated on a first bicomponent substrate located on a collector(13) flowing high voltage through a nozzle(12), and laminating forming polyvinylidene fluoride nanofiber non-woven fabric. In this case, the second bicomponent substrate can use waterproof coating bicomponent substrate.
Also, in the process of electrospinning and laminating forming the polyvinylidene fluoride solution on a first bicomponent substrate, by differing spinning conditions according to each unit(10a, 10b) of the electrospinning apparatus, in a first unit(10a), polyvinylidene fluoride nanofiber non-woven fabric with large fiber diameter is laminating formed, and in a second unit(10b), polyvinylidene fluoride nanofiber non-woven fabric with small diameter can be consecutively laminating formed.
According to the method as described above, after laminating forming polyvinylidene fluoride nanofiber non-woven fabric in each unit(10a, 10b), in a laminating device(100) located in the rear-end of the electrospinning apparatus(1), one side of a third bicomponent substrate laminated on a fourth bicomponent substrate is laminated in opposite side, goes through a process of thermosetting in a laminating device(90), and produces a filter. In this case, the third bicomponent substrate can use waterproof coating bicomponent substrate.

Example 16

Polyvinylidene fluoride with weight average molecular weight of 50,000 is dissolved in N,N-Dimethylacetamide(DMAc) and produces spinning solution, and it is inserted in a spinning solution main tank of each unit of the electrospinning apparatus. In each unit, after electrospinning the spinning solution on a second bicomponent substrate with basis weight of $30g/m^2$ laminated on a first bicomponent substrate with basis weight of $100g/m^2$, and laminating formed polyvinylidene fluoride nanofiber non-woven fabric with thickness of $3\mu m$. In a laminating device located in the rear-end of the electrospinning apparatus, on the polyvinylidene fluoride nanofiber non-woven fabric, laminated upper side of a third bicomponent substrate with basis weight of $30g/m^2$ laminated on a fourth bicomponent substrate with basis weight of $100g/m^2$. In a laminating device, thermosetting multi-layered non-woven fabric laminated in order of a first bicomponent, a second bicomponent substrate, polyvinylidene fluoride nanofiber non-woven fabric, a third bicomponent substrate, and a fourth bicomponent substrate, and produces a filter. In this case, electrospinning is performed in conditions of distance between an electrode and a collector is 40cm, applied voltage is 20kV, spinning solution flow rate is 0.1mL/h, temperature 22°C, and humidity 20%.

Example 17

Polyvinylidene fluoride with weight average molecular weight of 50,000 is dissolved in N,N-Dimethylacetamide(DMAc) and produces spinning solution, and it is inserted in a spinning solution main tank of each unit of the electrospinning apparatus. In each unit, after electrospinning the spinning solution on a waterproof coating second bicomponent substrate with basis weight of $30g/m^2$ laminated on a first bicomponent substrate with basis weight of $100g/m^2$, and laminating formed polyvinylidene fluoride nanofiber non-woven fabric with thickness of $3\mu m$. In a laminating device located in the rear-end of the electrospinning apparatus, on the polyvinylidene fluoride nanofiber non-woven fabric, laminated upper side of a waterproof coating third bicomponent substrate with basis weight of $30g/m^2$ laminated on a fourth polyethylene terephthalate substrate with basis weight of $100g/m^2$. In a laminating device, thermosetting multi-layered non-woven fabric laminated in order of a first bicomponent, a second bicomponent substrate, polyvinylidene fluoride nanofiber non-woven fabric, a third bicomponent substrate, and a fourth bicomponent substrate, and produces a filter. In this case, electrospinning is performed in conditions of distance between an electrode and a collector is 40cm, applied voltage is 20kV, spinning solution flow rate is 0.1mL/h, temperature 22°C, and humidity 20%.

Comparative Example 15

The bicomponent substrate used in example 16 is used as filter medium.

Comparative Example 16

By laminating forming polyvinylidene fluoride nanofiber non-woven fabric which electrospun polyvinylidene fluoride on a bicomponent substrate, and produces a filter.

Filtering efficiency of the example 16 and 17 and comparative example 15 is measured by the filtering efficiency measuring method and shown in Table 15.

[Table 15]

|  | Example 16 | Example 17 | Comparative example 15 |
|---|---|---|---|
| $0.35\mu m$ DOP Filtering efficiency(%) | 93 | 91 | 63 |

As described above, a filter produced by example 16 and 17, compared to comparative example 15, is excellent in filtering efficiency.

Also, pressure drop and filer sustainability of example 16 and 17 and comparative example 15 are measured and shown in Table 16.

[Table 16]

|  | Example 16 | Example 17 | Comparative example 15 |
|---|---|---|---|
| Pressure drop (in.w.g) | 4.2 | 4.1 | 5.2 |
| Filter sustainablity (month) | 6.0 | 6.2 | 3.8 |

According to Table 16, a filter produced by example 16 and 17 of the present invention, compared to comparative example 15, has low pressure drop which results in less pressure loss, and longer filter sustainability which results in excellence in durability.

In result of measuring whether desorption or not of nanofiber non-woven fabric and a filter substrate of filter produced by example 16 and 17 and comparative example 16 according to the measuring method, in a filter produced by example 16 and 17 does not occur desorption of nanofiber non-woven fabric, but a filter produced by comparative example 16 occurs desorption of nanofiber non-woven fabric.

Meanwhile, in the electrospinning apparatus(1) according to the present invention, provided 2 units(10a, 10b), and in another embodiment, it can be provided 3 units(10a, 10b, 10c). In other words, as illustrated in FIG. 17, 3 units(10a, 10b, 10c) are provided consecutively separated in predetermined space in order, and each of the unit(10a, 10b, 10c) individually electrospinning the same polymer spinning solution, or by individually electrospinning polymer spinning solution with different matter, and produces filter material such as non-woven fabric.

The following description explains manufacturing method of a filter of an embodiment of the present invention through the electrospinning apparatus (1'). In an embodiment of the present invention, by differing electrospinning voltage in each unit(10a, 10b, 10c) of the electrospinning apparatus(1'), in each unit, forms polyvinylidene fluoride nanofiber non-woven fabric with different fiber diameter.

First, polyvinylidene fluoride solution which dissolved polyvinylidene fluoride in organic solvent is provided to a spinning solution main tank(8) connected to each unit(10a, 10b, 10c) of the electrospinning apparatus, and polyvinylidene fluoride solution provided to the spinning solution main tank(8) is consecutively and quantitatively provided in a plurality of nozzle(12) of a nozzle block(11) provided high voltage through a metering pump(not shown). Polyvinylidene fluoride solution provided from each of the nozzle(12) electrospun and line-focused on a polyethylene terephthalate substrate located on a collector(13) flowing high voltage through a nozzle(12), and laminating forming polyvinylidene fluoride nanofiber non-woven fabric. Here, a substrate laminated polyvinylidene fluoride nanofiber non-woven fabric in each unit(10a, 10b, 10c) of the electrospinning apparatus(1) is carried from a first unit(10a) to a second unit(10b) to a third unit(10c) by a supply roller(3) operated by a motor(not shown) driving and rotation of an auxiliary carry device(16) driving by rotation of the supply roller(3), the process is repeated, and polyvinylidene fluoride nanofiber non-woven fabric is consecutively electruspun and laminating formed on the substrate.

Also, in the process of electrospinning and laminating forming the polyvinylidene fluoride solution on a substrate, by differing spinning conditions according to each unit(10a, 10b, 10c) of the electrospinning apparatus, in a first unit(10a), laminating forming a first polyvinylidene fluoride nanofiber non-woven fabric, in a second unit(10b), consecutively laminating forming a second polyvinylidene fluoride nanofiber non-woven fabric with fiber diameter smaller than that of a first polyvinylidene fluoride nanofiber non-woven fabric, and in a third unit(10c), consecutively laminating forming a third polyvinylidene fluoride nanofiber non-woven fabric with fiber diameter similar to that of a first polyvinylidene fluoride nanofiber non-woven fabric.

A voltage generator(14a), which is installed in a first unit(10a) of the electrospinning apparatus(1) and provides voltage to the first unit(10a), by providing low spinning voltage, and forms a first polyvinylidene fluoride nanofiber non-woven fabric of fiber diameter of 150 to 250nm on a polyethylene terephthalate substrate, a voltage generator(14b), which is installed in a second unit(10b) of the electrospinning apparatus(1) and provides voltage to the second unit(10b), by providing high spinning voltage, and laminating forms a second polyvinylidene fluoride nanofiber non-woven fabric of fiber diameter of 100 to 150nm on the first polyvinylidene fluoride nanofiber non-woven fabric, and a voltage generator(14c), which is installed in a third unit(10c) of the electrospinning apparatus(1) and provides voltage to the third unit(10c), by providing spinning voltage similar to that of the first unit, and laminating forms a third polyvinylidene fluoride nanofiber non-woven fabric of fiber diameter of 150 to 250nm on the second polyvinylidene fluoride nanofiber non-woven fabric. Here, spinning voltage provided by each of the voltage generator (14a, 14b, 14c) is 1kV or more, and preferably 15kV or more, and voltage provided by the voltage generator(14a) of the first unit(10a) is lower than voltage provided by the voltage generator(14b) of the second unit(10b), and voltage provided by the voltage generator(14c) of the third unit(10c) is the same as voltage provided by the voltage generator(14a) of the first unit(10a).

In the present invention, for spinning solution, polyvinylidene fluoride solution which dissolved polyvinylidene fluoride in organic solvent is used, and polyvinylidene fluoride and hot melt can be mixed and used, and polyvinylidene fluoride solution and hot melt solution can be used provided differently according to each unit.

According to the method as described above, in a first unit(10a), electrospinning polyvinylidene fluoride solution on a first substrate, and laminating formed a first polyvinylidene fluoride nanofiber non-woven fabric of fiber diameter of 150 to 250nm, in a second unit(10b), electrospinning polyvinylidene fluoride solution on the first polyvinylidene fluoride nanofiber non-woven fabric, and laminating formed a second polyvinylidene fluoride nanofiber non-woven fabric of fiber diameter of 100 to 150nm, in a third unit(10c), electrospinning polyvinylidene fluoride solution on the second polyvinylidene fluoride nanofiber non-woven fabric, and laminating formed a third polyvinylidene fluoride nanofiber non-woven fabric of fiber diameter of 150 to 250nm. After, in a laminating device(100) located in the rear-end of the electrospinning apparatus(1), one side of the polyvinylidene fluoride nanofiber non-woven fabric is laminated to a second substrate in opposite side, and going through a process of thermosetting in a laminating device(90), and produces a filter. Here, basis weight of the first substrate and second substrate is preferably 10 to 300g/m$^2$.

Example 18

Polyvinylidene fluoride with weight average molecular weight of 50,000 is dissolved in N,N-Dimethylacetamide(DMAc) and produces spinning solution, and it is inserted in a spinning solution main tank of each unit of the electrospinning apparatus. A first polyethylene terephthalate substrate with basis weight of 150g/m$^2$ is located on a collector of the electrospinning apparatus. In a first unit of the electrospinning apparatus, applied voltage is provided 15kV, electrospinning the spinning solution, and laminating formed a first polyvinylidene fluoride nanofiber non-woven fabric with thickness of 2$\mu$m and fiber diameter of 250nm. In a second unit, applied voltage is provided 20kV, electrospinning the spinning solution on the first polyvinylidene fluoride nanofiber non-woven fabric, and laminating formed a second polyvinylidene fluoride nanofiber non-woven fabric with thickness of 2$\mu$m and fiber diameter of 130nm. In a third unit, applied voltage is provided 15kV, electrospinning the spinning solution on the second polyvinylidene fluoride nanofiber non-woven fabric, and laminating formed a third polyvinylidene fluoride nanofiber non-woven fabric with thickness of 2$\mu$m and fiber diameter of 250nm. In a laminating device located in the rear-end of the electrospinning apparatus, upper side of a second polyethylene terephthalate substrate and upper side of the third polyvinylidene fluoride nanofiber non-woven fabric are laminated. In a laminating device, thermosetting multi-layered non-woven fabric laminated in order of a first polyethylene terephthalate substrate, a first, a second, and a third polyvinylidene fluoride nanofiber non-woven fabric, and a second polyethylene terephthalate substrate, and produces a filter. In this case, electrospinning is performed in conditions of distance between an electrode and a collector is 40cm, spinning solution flow rate is 0.1mL/h, temperature 22°C, and humidity 20%.

Comparative Example 17

The polyethylene terephthalate substrate used in example 18 is used as filter medium.

Comparative Example 18

By laminating forming polyvinylidene fluoride nanofiber non-woven fabric which electrospun polyvinylidene fluoride on a polyethylene terephthalate substrate, and produces a filter. Filtering efficiency of example 18 and comparative example 17 is measured by the filtering efficiency measuring method and shown in Table 17.

[Table 17]

|  | Example 18 | Comparative example 17 |
|---|---|---|
| 0.35$\mu$m DOP Filtering efficiency(%) | 93 | 63 |

As described above, a filter produced by example 18 of the present invention, compared to comparative example 17, is excellent in filtering efficiency.

Also, pressure drop and filter sustainability of a filter produced by example 18 and comparative example 17 are measured and shown in Table 18.

[Table 18]

|  | Example 18 | Comparative example 17 |
|---|---|---|
| Pressure drop(in.w.g) | 4.2 | 5.2 |
| Filter sustainability (month) | 6.3 | 3.8 |

According to Table 18, a filter produced through example 18, compared to comparative example 17, has low pressure drop which results in low pressure lose and has longer filter sustainability which results in excellence in durability.

In result of measuring whether desorption or not of nanofiber non-woven fabric and a filter substrate of a filter produced by example 18 and comparative example 18 by the measuring method, in a filter produced by example 18 does not occur desorption of nanofiber non-woven fabric, but a filter produced by comparative example 18 occurs desorption of nanofiber non-woven fabric.

Meanwhile, in an embodiment of the present invention, for substrate, a cellulose substrate is used, and in another embodiment of the present invention, for substrate, a general substrate used conventionally in filter is used. Here, the general substrate comprises a cellulose substrate, a PET substrate, synthetic fiber, natural fiber, and etc. Also, for polymer, nylon and polyvinylidene fluoride can be used. Here, for the nylon, it is nylon 6, nylon 66, and nylon 12, etc.

In order to produce a filter of an embodiment the present invention, produced by the method as described above, first, nylon solution which dissolved nylon in organic solvent is provided to a spinning solution main tank(8) connected to a first unit(10a) of the electrospinning apparatus(1'), polyvinylidene fluoride solution which dissolved polyvinylidene fluoride in organic solvent is provided to a spinning solution main tank(8) connected to a second unit(10b) of the electrospinning apparatus, nylon solution which dissolved nylon in organic solvent is provided to a spinning solution main tank(8) connected to a third unit(10c) of the electrospinning apparatus, and nylon and polyvinylidene fluoride solution provided to the spinning solution main tank(8) is consecutively and quantitatively provided in a plurality of nozzle(12) of a nozzle block(11) provided high voltage through a metering pump(not shown). Nylon and polyvinylidene fluoride solution provided from each of the nozzle(12) electrospun and line-focused on a first substrate located on a collector(13) flowing high voltage through a nozzle(12), and laminating formed polyvinylidene fluoride nanofiber non-woven fabric.

Here, in order to provide grade of fiber diameter, method of differing voltage intensity provided according to each unit(10a, 10b, 10c) is used, and by differing distance between a nozzle(12) and a collector(13), nanofiber non-woven fabric with different fiber diameter can be formed. In this case, in the case of spinning solution type and provided voltage intensity is the same, according to the principle of nearer spinning distance, larger fiber diameter, and further spinning distance, smaller fiber diameter, nanofiber non-woven fabric with different fiber diameter can be formed. Also, by adjusting spinning solution concentration and viscosity, or by adjusting an elongated sheet feed speed, fiber diameter can be different.

According to the method as described above, after laminating forming a first nylon nanofiber non-woven fabric, polyvinylidene fluoride nanofiber non-woven fabric, and a second nylon nanofiber non-woven fabric on a first substrate in each unit(10a, 10b), in a laminating device(100) located in the rear-end of the electrospinning apparatus(1'), one side of a second substrate is laminated on a second nylon nanofiber non-woven fabric, goes through a process of thermosetting in a laminating device(90), and produces a filter.

Example 19

Nylon 6 is dissolved in formic acid and produces spinning solution, and it is inserted in a spinning solution main tank of a first and a third unit of the electrospinning apparatus. Polyvinylidene fluoride with weight average molecular weight of 50,000 is dissolved in N,N-Dimethylacetamide(DMAc) and produces spinning solution, and it is inserted in a spinning solution main tank of a second unit of the electrospinning apparatus. A first polyethylene terephthalate substrate with basis weight of 150g/m$^2$ is located on a collector of the electrospinning apparatus. In a first unit of the electrospinning apparatus, applied voltage is provided 17.5kV, electrospinning the spinning solution on the first polyethylene terephthalate substrate, and laminating formed a first nylon 6 nanofiber non-woven fabric with thickness of 2$\mu$m and fiber diameter of 150nm. In a second unit, applied voltage is provided 20kV, electrospinning the polyvinylidene fluoride spinning solution on the first nylon 6 nanofiber non-woven fabric, and laminating formed polyvinylidene fluoride nanofiber non-woven fabric with thickness of 2$\mu$m and fiber diameter of 100nm. In a third unit, applied voltage is provided 17.5kV, electrospinning the nylon 6 spinning solution on the polyvinylidene fluoride nanofiber non-woven fabric, and laminating formed a second nylon nanofiber non-woven fabric with thickness of 2$\mu$m and fiber diameter of 150nm. In a laminating device located in the rear-end of the electrospinning apparatus, upper side of a second polyethylene terephthalate substrate and upper side of the second nylon 6 nanofiber non-woven fabric are laminated. In a laminating device, thermosetting multi-layered non-woven fabric laminated in order of a first polyethylene terephthalate substrate, a first nylon 6 nanofiber non-woven fabric, polyvinylidene fluoride nanofiber non-woven fabric, a second nylon 6 nanofiber non-woven fabric, and a second polyethylene terephthalate substrate, and produces a filter. In this case, electrospinning is performed in conditions of distance between an electrode and a collector is 40cm, spinning solution flow rate is O.lmL/h, temperature 22°C, and humidity 20%.

Example 20

Nylon 6 and polyamide group resin for hot melt are dissolved in formic acid and produces spinning solution, and it is inserted in a spinning solution main tank of a first and a third unit of the electrospinning apparatus. Polyvinylidene fluoride with weight average molecular weight of 50,000 and polyvinylidene fluoride group resin for hot melt are dissolved in N,N-Dimethylacetamide(DMAc) and produces spinning solution, and it is inserted in a spinning solution main tank of a second unit of the electrospinning apparatus. A first polyethylene terephthalate substrate with basis weight of $150g/m^2$ is located on a collector of the electrospinning apparatus. In a first unit of the electrospinning apparatus, applied voltage is provided 17.5kV, electrospinning the spinning solution on the first polyethylene terephthalate substrate, and laminating formed a first nylon 6 nanofiber non-woven fabric with thickness of $2\mu$m and fiber diameter of 150nm. In a second unit, applied voltage is provided 20kV, electrospinning the polyvinylidene fluoride spinning solution on the first nylon 6 nanofiber non-woven fabric, and laminating formed polyvinylidene fluoride nanofiber non-woven fabric with thickness of $2\mu$m and fiber diameter of 100nm. In a third unit, applied voltage is provided 17.5kV, electrospinning the nylon 6 spinning solution on the polyvinylidene fluoride nanofiber non-woven fabric, and laminating formed a second nylon nanofiber non-woven fabric with thickness of $2\mu$m and fiber diameter of 150nm. In a laminating device located in the rear-end of the electrospinning apparatus, upper side of a second polyethylene terephthalate substrate and upper side of the second nylon 6 nanofiber non-woven fabric are laminated. In a laminating device, thermosetting multi-layered non-woven fabric laminated in order of a first polyethylene terephthalate substrate, a first nylon 6 nanofiber non-woven fabric, polyvinylidene fluoride nanofiber non-woven fabric, a second nylon 6 nanofiber non-woven fabric, and a second polyethylene terephthalate substrate, and produces a filter. In this case, electrospinning is performed in conditions of distance between an electrode and a collector is 40cm, spinning solution flow rate is O.lmL/h, temperature 22°C, and humidity 20%.

Comparative Example 19

The first polyethylene terephthalate substrate used in example 19 is used as filter medium.

Comparative Example 20

By laminating forming polyvinylidene fluoride nanofiber non-woven fabric which electrospun polyvinylidene fluoride on a polyethylene terephthalate substrate, and produces a filter. Filtering efficiency of example 19 and 20 and comparative example 19 is measured according to the filtering efficiency measuring method and shown in Table 19.

[Table 19]

|  | Example 19 | Example 20 | Comparative example 19 |
|---|---|---|---|
| 0.35$\mu$m DOP Filtering efficiency(%) | 91 | 92 | 63 |

As described above, a filter produced by example 19 and 20 of the present invention, compared to comparative example 19, is excellent in filtering efficiency.

Also, pressure drop and filter sustainability of filter produced by example 19 and 20 and comparative example 19 are measured and shown in Table 20.

[Table 20]

|  | Example 19 | Example 20 | Comparative example 19 |
|---|---|---|---|
| Pressure drop (in.w.g) | 4.2 | 4.1 | 5.2 |
| Filter sustainability (month) | 6.3 | 6.1 | 3.8 |

According to Table 20, a filter produced through example 19 and 20, compared to comparative example 19, has low pressure drop which results in low pressure lose and has longer filter sustainability which results in excellence in durability.

In result of measuring whether desorption or not of nanofiber non-woven fabric and a filter substrate of a filter produced by example 19 and 20 and comparative example 20 by the measuring method, in a filter produced by example 19 and 20 does not occur desorption of nanofiber non-woven fabric, but in a filter produced by comparative example 20 occurs desorption of nanofiber non-woven fabric.

Meanwhile, in an embodiment of the present invention, for substrate, a cellulose substrate is used, and in another embodiment of the present invention, for substrate, a general substrate used conventionally in filter is used. Here, the general substrate comprises a cellulose substrate, a PET substrate, synthetic fiber, natural fiber, and etc. Also, for nanofiber non-woven fabric, polyurethane non-woven fabric and polyvinylidene fluoride nanofiber non-woven fabric can be used.

In order to produce a filter of an embodiment the present invention, produced by the method as described above, first, polyurethane solution which dissolved polyurethane in organic solvent is provided to a spinning solution main tank(8) connected to a first unit(10a) of the electrospinning apparatus(1'), polyvinylidene fluoride solution which dissolved polyvinylidene fluoride in organic solvent is provided to a spinning solution main tank(8) connected to a second unit(10b) of the electrospinning apparatus, and the polyurethane solution is provided to a spinning solution main tank(8) connected to a third unit(10c) of the electrospinning apparatus, and polyurethane and polyvinylidene fluoride solution provided to the spinning solution main tank(8) is consecutively and quantitatively provided in a plurality of nozzle(12) of a nozzle block(11) provided high voltage through a metering pump(not shown). Polyurethane and polyvinylidene fluoride solution provided from each of the nozzle(12) electrospun and line-focused on a first substrate located on a collector(13) flowing high voltage through a nozzle(12), and laminating formed a first polyurethane nanofiber non-woven fabric, polyvinylidene fluoride nanofiber non-woven fabric, and a second polyurethane nanofiber non-woven fabric in order.

Here, in order to provide grade of fiber diameter, method of differing voltage intensity provided according to each unit(10a, 10b, 10c) can be used.

According to the method as described above, after laminating forming a first polyurethane nanofiber non-woven fabric, polyvinylidene fluoride nanofiber non-woven fabric, and a second polyurethane nanofiber non-woven fabric on a first substrate in each unit(10a, 10b, 10c), in a laminating device(100) located in the rear-end of the electrospinning apparatus(1'), one side of a second substrate is laminated on a second polyurethane nanofiber non-woven fabric, goes through a process of thermosetting in a laminating device(90), and produces a filter.

Example 21

Polyurethane is dissolved in N,N-Dimethylacetamide(DMAc) and produces spinning solution, and it is inserted in a spinning solution main tank of a first and a third unit of the electrospinning apparatus. Polyvinylidene fluoride with weight average molecular weight of 50,000 is dissolved in N,N-Dimethylacetamide(DMAc) and produces spinning solution, and it is inserted in a spinning solution main tank of a second unit of the electrospinning apparatus. In a first unit of the electrospinning apparatus, electrospinning the polyurethane solution on a first polyethylene terephthalate substrate of basis weight of 150g/m$^2$, and laminating formed a first polyurethane nanofiber non-woven fabric with thickness of $2\mu$m. In a second unit, applied voltage electrospinning the polyvinylidene fluoride spinning solution on the first polyurethane nanofiber non-woven fabric, and laminating formed polyvinylidene fluoride nanofiber non-woven fabric with thickness of $2\mu$m. In a third unit, electrospinning the polyurethane spinning solution on the polyvinylidene fluoride nanofiber non-woven fabric, and laminating formed a second polyurethane nanofiber non-woven fabric with thickness of $2\mu$m. In a laminating device located in the rear-end of the electrospinning apparatus, upper side of a second polyethylene terephthalate substrate with basis weight of 150g/m$^2$ is laminated on the second polyurethane nanofiber non-woven fabric. In a laminating device, thermosetting multi-layered non-woven fabric laminated in order of a first polyethylene terephthalate substrate, a first polyurethane nanofiber non-woven fabric, polyvinylidene fluoride nanofiber non-woven fabric, a second polyurethane nanofiber non-woven fabric, and a second polyethylene terephthalate substrate, and produces a filter. In this case, electrospinning is performed in conditions of distance between an electrode and a collector is 40cm, applied voltage is 20kV, spinning solution flow rate is 0.1mL/h, temperature 22°C, and humidity 20%.

Comparative Example 21

The first polyethylene terephthalate substrate used in example 21 is used as filter medium.

Comparative Example 22

By laminating forming polyvinylidene fluoride nanofiber non-woven fabric which electrospun polyvinylidene fluoride on a polyethylene terephthalate substrate, and produces a filter. Filtering efficiency of example 21 and comparative example 21 is measured according to the filtering efficiency measuring method and shown in Table 21. Also, pressure drop and filter sustainability of a filter produced by example 21 and comparative example 21 are measured and shown in Table 22.

[Table 21]

|  | Example 21 | Comparative example 21 |
|---|---|---|
| 0.35$\mu$m DOP Filtering efficiency(%) | 90 | 63 |

[Table 22]

|  | Example 21 | Comparative example 21 |
|---|---|---|
| Pressure drop (in.w.g) | 4.2 | 5.2 |
| Filter sustainability (month) | 6.1 | 3.8 |

As described above, a filter comprising polyvinylidene fluoride and nanofiber non-woven fabric produced by example 21, compared to comparative example 21, is excellent in filtering efficiency.

Also, according to Table 22, a filter produced through example 21, compared to comparative example 21, has low pressure drop which results in low pressure lose and has longer filter sustainability which results in excellence in durability.

In result of measuring whether desorption or not of nanofiber non-woven fabric and a filter substrate of a filter produced by example 21 and comparative example 22 by the measuring method, in a filter produced by example 21 does not occur desorption of nanofiber non-woven fabric, but in a filter produced by comparative example 22 occurs desorption of nanofiber non-woven fabric.

Meanwhile, in an embodiment of the present invention, for substrate, a cellulose substrate is used, and in another embodiment of the present invention, for substrate, a general substrate used conventionally in filter is used. Here, the general substrate comprises a cellulose substrate, a PET substrate, synthetic fiber, natural fiber, and etc. Also, for nanofiber non-woven fabric, low melting point polyvinylidene fluoride nanofiber non-woven fabric and high melting point polyvinylidene fluoride nanofiber non-woven fabric can be used.

In order to produce a filter of an embodiment the present invention, produced by the method as described above, first, low melting point polyvinylidene fluoride solution which dissolved low melting point polyvinylidene fluoride in organic solvent is provided to a spinning solution main tank(8) connected to a first unit(10a) of the electrospinning apparatus, high melting point polyvinylidene fluoride solution which dissolved high melting point polyvinylidene fluoride in organic solvent is provided to a spinning solution main tank(8) connected to a second unit(10b) of the electrospinning apparatus, and the low melting point polyvinylidene fluoride solution is provided to a spinning solution main tank(8) connected to a third unit(10c) of the electrospinning apparatus, and low melting point and high melting point polyvinylidene fluoride solution provided to the spinning solution main tank(8) is consecutively and quantitatively provided in a plurality of nozzle(12) of a nozzle block(11) provided high voltage through a metering pump(not shown). Polyvinylidene fluoride solution provided from each of the nozzle(12) electrospun and line-focused on a first substrate located on a collector(13) flowing high voltage through a nozzle(12), and laminating formed a first low melting point polyvinylidene fluoride nanofiber non-woven fabric, high melting point polyvinylidene fluoride nanofiber non-woven fabric, and a second low melting point polyvinylidene fluoride nanofiber non-woven fabric in order. Here, in order to provide grade of fiber diameter, method of differing voltage intensity provided according to each unit(10a, 10b, 10c) can be used.

According to the method as described above, after laminating forming a first low melting point polyvinylidene fluoride nanofiber non-woven fabric, high melting point polyvinylidene fluoride nanofiber non-woven fabric, and a second low melting point polyvinylidene fluoride nanofiber non-woven fabric on a first substrate in each unit(10a, 10b, 10c), in a laminating device(100) located in the rear-end of the electrospinning apparatus, one side of a second substrate is laminated on a second polyurethane nanofiber non-woven fabric, goes through a process of thermosetting in a laminating device(90), and produces a filter.

Example 22

Low melting point polyvinylidene fluoride with weight average molecular weight of 5,000 is dissolved in formic acid and produces spinning solution, and it is inserted in a spinning solution main tank of a first and a third unit of the electrospinning apparatus. High melting point polyvinylidene fluoride with weight average molecular weight of 50,000 is dissolved in N,N-Dimethylacetamide(DMAc) and produces high melting point polyvinylidene fluoride spinning solution, and it is inserted in a spinning solution main tank of a second unit of the electrospinning apparatus. A first polyethylene terephthalate substrate with basis weight of 150g/m$^2$ is located on a collector of the electrospinning apparatus. In a first unit of the electrospinning apparatus, laminating forming a first low melting point polyvinylidene fluoride nanofiber non-woven fabric on a first polyethylene terephthalate substrate, in a second unit, electrospinning the high melting point polyvinylidene fluoride spinning solution on the first low melting point polyvinylidene fluoride nanofiber non-woven fabric, and laminating formed high melting point polyvinylidene fluoride nanofiber non-woven fabric. In a third unit, electrospinning the low melting point polyvinylidene fluoride spinning solution on the high melting point polyvinylidene fluoride nanofiber non-woven fabric, and laminating formed a second low melting point polyvinylidene fluoride nanofiber non-woven fabric. In a laminating device located in the rear-end of the electrospinning apparatus, upper side of a second polyethylene terephthalate substrate and upper side of the second low melting point polyvinylidene fluorde nanofiber non-woven fabric are laminated. In a laminating device, thermosetting multi-layered non-woven fabric laminated in order of a first polyethylene terephthalate substrate, a first low melting point polyvinylidene fluoride nanofiber non-woven fabric, a second low melting point polyvinylidene fluoride nanofiber non-woven fabric, and a second polyethylene terephthalate, and produces a filter. In this case, electrospinning is performed in conditions of distance between an electrode and a collector is 40cm, spinning solution flow rate is 0.1mL/h, temperature 22°C, and humidity 20%.

Comparative Example 23

The polyethylene terephthalate substrate used in example 22 is used as filter medium.

Comparative Example 24

By laminating forming polyvinylidene fluoride nanofiber non-woven fabric which electrospun polyvinylidene fluoride on a polyethylene terephthalate substrate, and produces a filter.

Filtering efficiency of example 22 and comparative example 23 is measured according to the filtering efficiency measuring method and shown in Table 23. Also, pressure drop and filter sustainability of a filter produced by example 22 and comparative example 23 are measured and shown in Table 24.

[Table 23]

|  | Example 22 | Comparative example 23 |
|---|---|---|
| 0.35$\mu$m DOP Filtering efficiency(%) | 91 | 63 |

[Table 24]

|  | Example 22 | Comparative example 23 |
|---|---|---|
| Pressure drop (in.w.g) | 4.1 | 5.2 |
| Filter sustainability(month) | 6.1 | 3.8 |

As described above, a filter produced by example 22, compared to comparative example 23, is excellent in filtering efficiency.

Also, according to Table 24, a filter produced through example 22, compared to comparative example 23, has low pressure drop which results in low pressure lose and has longer filter sustainability which results in excellence in durability.

In result of measuring whether desorption or not of nanofiber non-woven fabric and a filter substrate of a filter produced by example 22 and comparative example 24 by the measuring method, in a filter produced by example 22 does not occur desorption of nanofiber non-woven fabric, but in a filter produced by comparative example 24 occurs desorption of nanofiber non-woven fabric.

While this invention has been described in connection with what is presently considered to be practical exemplary embodiments, it is to be understood that the invention is not limited to the disclosed embodiments, on the contrary, is intended to cover carious modifications and equivalent arrangements included within the spirit and scope of the appended claims.

**Claims**

**1.**    A filter comprising nanofiber between substrates, comprising:

a first cellulose substrate;
polyvinylidene fluoride nanofiber non-woven fabric laminated on first cellulose substrate by electrospinning; and
a second cellulose substrate laminated on the polyvinylidene fluoride nanofiber non-woven fabric,
the first and second cellulose substrates and the polyvinylidene fluoride nanofiber non-woven fabric are thermosetted each other.

2. The filter comprising nanofiber between substrates of claim 1, wherein the polyvinylidene fluoride nanofiber non-woven fabric comprises a first polyvinylidene fluoride nanofiber non-woven fabric layer of fiber diameter of 150 to 300nm and a second polyvinylidene fluoride nanofiber non-woven fabric layer of fiber diameter of 100 to 150nm laminated on the first polyvinylidene fluoride nanofiber non-woven fabric layer.

3. The filter comprising nanofiber between substrates of claim 1, hot melt electrospinning layer provides between the first cellulose substrate and the polyvinylidene fluoride nanofiber non-woven fabric and between the second cellulose substrate and the polyvinylidene fluoride nanofiber non-woven fabric.

4. The filter comprising nanofiber between substrates of claim 1, wherein the polyvinylidene fluoride nanofiber non-woven fabric is polyvinylidene fluoride hot melt nanofiber non-woven fabric which is formed by electrospinning polyvinylidene fluoride and hot melt mixed solution.

5. The filter comprising nanofiber between substrates of claim 3, wherein the hot melt is polyvinylidene fluoride group hot melt.

6. The filter comprising nanofiber between substrates of claim 1, wherein the first and second cellulose substrates comprise cellulose and polyethylene terephthalate.

7. The filter comprising nanofiber between substrates of claim 6, wherein the first and second cellulose substrates have the cellulose composition ration 70 to 90 weight%, and the polyethylene terephthalate composition ration 10 to 30 weight%.

8. The filter comprising nanofiber between substrates of claim 1, wherein the first and second cellulose substrates are coated by flame resistant.

9. A filter comprising nanofiber between substrates, comprising:

a first bicomponent substrate;
polyvinylidene fluoride - hot melt nanofiber non-woven fabric laminated by electrospinning polyvinylidene fluoride and hot melt mixed solution on one side of the first bicomponent substrate; and
a second bicomponent substrate laminated on the polyvinylidene fluoride - hot melt nanofiber non-woven fabric,
the first and second bicomponent substrates and the polyvinylidene fluoride - hot melt nanofiber non-woven fabric are thermosetted each other.

10. A filter comprising nanofiber between substrates, comprising:

a first polyethylene terephthalate substrate;
high melting point and low melting point polyvinylidene fluoride nanofiber non-woven fabric laminating formed by electrospinning high melting point polyvinylidene fluoride and low melting point polyvinylidene fluoride mixed solution; and
a second polyethylene terephthalate substrate laminated on the high melting point and low melting point polyvinylidene fluoride nanofiber non-woven fabric,
the first and second polyethylene terephthalate substrates and the high melting point and low melting point polyvinylidene fluoride nanofiber non-woven fabrics are thermosetted each other.

11. A filter comprising nanofiber between substrates, comprising:

a first substrate;
polyurethane and polyvinylidene fluoride mixed nanofiber non-woven fabric laminated by electrospinning polyvinylidene fluoride and polyurethane mixed solution on the first substrate; and
a second substrate laminated on the nanofiber non-woven fabric,

the first and second substrates and the polyurethane and polyvinylidene fluoride mixed nanofiber non-woven fabric are thermosetted each other.

**12.** A filter comprising nanofiber between substrates, comprising:

a first polyethylene terephthalate substrate;
a first bicomponent substrate laminated on the first polyethylene terephthalate substrate;
polyvinylidene fluoride nanofiber non-woven fabric laminated by electrospinning on the first bicomponent substrate;
a second bicomponent substrate laminated on the polyvinylidene fluoride nanofiber non-woven fabric; and
a second polyethylene terephthalate substrate laminated on the second bicomponenet substrate,
the first and second polyethylene terephthalate substrates, the first and second bicomponent substrates, and the polyvinylidene fluoride nanofiber non-woven fabric are thermosetted each other.

**13.** A filter comprising nanofiber between substrates, comprising:

a first polyethylene terephthalate substrate;
a first bicomponent substrate laminated on the first polyethylene terephthalate substrate;
high melting point and low melting point polyvinylidene fluoride nanofiber non-woven fabric laminated by electrospinning high melting point polyvinylidene fluoride and low melting point polyvinylidene fluoride mixed solution on the first bicomponent substrate;
a second bicomponent substrate laminated on the high melting point and low melting point polyvinylidene fluoride nanofiber non-woven fabric; and
a second polyethylene terephthalate substrate laminated on the second bicomponent substrate,
the first and second polyethylene terephthalate substrates, the first and second bicomponent substrates, and the high melting point and low melting point polyvinylidene fluoride nanofiber non-woven fabrics are thermosetted each other.

**14.** A filter comprising nanofiber between substrates, comprising:

a first polyethylene terephthalate substrate;
a first bicomponent substrate laminated on the first polyethylene terephthalate substrate;
nylon nanofiber non-woven fabric laminating formed by electrospinning on the first bicomponent substrate;
a second bicomponent substrate laminated on the nylon nanofiber non-woven fabric; and
a second polyethylene terephthalate substrate laminated on the second bicomponent substrate,
the first and second polyethylene terephthalate substrates, the first and second bicomponent substrates and the nylon nanofiber non-woven fabric are thermosetted each other.

**15.** A filter comprising nanofiber between substrates, comprising:

a first bicomponent substrate;
a second bicomponent substrate laminated on the first bicomponent substrate;
polyvinylidene fluoride nanofiber non-woven fabric laminated by electrospinning on the second bicomponent substrate;
a third bicomponent substrate laminated on the polyvinylidene fluoride nanofiber non-woven fabric; and
a fourth bicomponent substrate laminated on the third bicomponent substrate.

**16.** A filter comprising nanofiber between substrates, comprising:

a first substrate;
a first polyvinylidene fluoride nanofiber non-woven fabric of fiber diameter of 150 to 250nm laminating formed by electrospinning on the first substrate;
a second polyvinylidene fluoride nanofiber non-woven fabric of fiber diameter of 100 to 150nm laminated by electrospinning on the first polyvinylidene fluoride nanofiber non-woven fabric;
a third polyvinylidene fluoride nanofiber non-woven fabric of fiber diameter of 150 to 250nm laminated by electrospinning on the second polyvinylidene fluoride nanofiber non-woven fabric; and
a second substrate laminated on the third polyvinylidene fluoride nanofiber non-woven fabric,
the first, second, and third polyvinylidene fluoride nanofiber non-woven fabrics, and the first and second substrates are thermosetted each other.

17. A filter comprising nanofiber between substrates, comprising:

a first substrate;
a first nylon nanofiber non-woven fabric of fiber diameter of 100 to 150nm laminated by electrospinning on the first substrate;
polyvinylidene fluoride nanofiber non-woven fabric of fiber diameter of 80 to 150nm laminated by electrospinning on the first nylon nanofiber non-woven fabric;
a second nylon nanofiber non-woven fabric of fiber diameter of 100 to 150nm laminated by electrospinning on the polyvinylidene fluoride nanofiber non-woven fabric; and
a second substrate laminated on the second nylon nanofiber non-woven fabric,
the first and second substrates, the first and second nylon nanofiber non-woven fabrics, and polyvinylidene fluoride nanofiber non-woven fabric are thermosetted each other.

18. A filter comprising nanofiber between substrates, comprising:

a first substrate;
a first polyurethane nanofiber non-woven fabric laminated by electrospinning polyurethane solution on the first substrate in a first unit of the electrospinning apparatus;
polyvinylidene fluoride nanofiber non-woven fabric laminated by electrospinning polyvinylidene fluoride solution on the first polyurethane nanofiber non-woven fabric in a second unit of the electrospinning apparatus;
a second polyurethane nanofiber non-woven fabric laminated by electrospinning polyurethane solution on the polyvinylidene fluoride nanofiber non-woven fabric in a third unit of the electrospinning apparatus; and
a second substrate laminated on the second polyurethane nanofiber non-woven fabric,
the first and second substrates, the first and second polyurethane nanofiber non-woven fabrics, and the polyvinylidene fluoride nanofiber non-woven fabric are thermosetted each other.

19. A filter comprising nanofiber between substrates, comprising:

a first substrate;
a first low melting point polyvinylidene fluoride nanofiber non-woven fabric laminated by electrospinning on the first substrate in a first unit of the electrospinning apparatus;
high melting point polyvinylidene fluoride nanofiber non-woven fabric laminated by electrospinning on the first low melting point polyvinylidene fluoride nanofiber non-woven fabric in a second unit of the electrospinning apparatus;
a second low melting point polyvinylidene fluoride nanofiber non-woven fabric laminated by electrospinning on the high melting point polyvinylidene fluoride nanofiber non-woven fabric in a third unit of the electrospinning apparatus; and a second substrate laminated on the second low melting point polyvinylidene fluoride nanofiber non-woven fabric,
the first and second substrates, the first and second low melting point polyvinylidene fluoride nanofiber non-woven fabrics, and the high melting point polyvinylidene fluoride nanofiber non-woven fabric are thermosetted each other.

20. A method for manufacturing filter comprising nanofiber between substrates, by the electrospinning apparatus comprises 2 or more units, spinning solution main tank is independently connected and installed in nozzle of nozzle block located in each unit, a laminating device for bonding other fabrics is provided, and polymer spinning solution is spinned on a substrate located in a collector of each unit, comprising:

a step of injecting spinning solution which dissolved polyvinylidene fluoride in solvent to a supply device of each unit of the electrospinning apparatus;
a step of laminating-forming polyvinylidene fluoride nanofiber non-woven fabric by consecutively electrospinning the spinning solution on a first cellulose substrate in each of the unit;
a step of adhering a second cellulose substrate on polyvinylidene fluoride nanofiber non-woven fabric laminated on the first cellulose substrate in the laminating device located in the rear-end of the electrospinning apparatus; and
a step of thermosetting the first cellulose substrate, the polyvinylidene fluoride nanofiber non-woven fabric, and the second cellulose substrate.

21. A method for manufacturing filter comprising nanofiber between substrates, by the electrospinning apparatus comprises 2 or more units, spinning solution main tank is independently connected and installed in nozzle of nozzle block located in each unit, a laminating device for bonding other fabrics is provided, and polymer spinning solution is spinned on a substrate located in a collector of each unit, comprising:

a step of injecting spinning solution which dissolved polyvinylidene fluoride and hot melt in solvent to a supply device of each unit of the electrospinning apparatus;
a step of laminating-forming polyvinylidene fluoride - hot melt nanofiber non-woven fabric by consecutively electrospinning the spinning solution on a first bicomponent substrate in each of the unit;
a step of adhering a second bicomponent substrate on polyvinylidene fluoride - hot melt nanofiber non-woven fabric laminated on the first bicomponent substrate in the laminating device located in the rear-end of the electrospinning apparatus; and
a step of thermosetting the first bicomponent substrate, the polyvinylidene fluoride - hot melt nanofiber non-woven fabric, and the second bicomponent substrate.

22. A method for manufacturing filter comprising nanofiber between substrates, by the electrospinning apparatus comprises 2 or more units, spinning solution main tank is independently connected and installed in nozzle of nozzle block located in each unit, a laminating device for bonding other fabrics is provided, and polymer spinning solution is spinned on a substrate located in a collector of each unit, comprising:

a step of injecting spinning solution which dissolved high melting point polyvinylidene fluoride and low melting point polyvinylidene fluoride in solvent to a supply device of each unit of the electrospinning apparatus;
a step of laminating-forming high melting point and low melting point polyvinylidene fluoride nanofiber non-woven fabric by consecutively electrospinning the spinning solution on a first polyethylene terephthalate substrate in each of the unit;
a step of adhering a second polyethylene terephthalate substrate on high melting point and low melting point polyvinylidene fluoride nanofiber non-woven fabric laminated on the first polyethylene terephthalate substrate in the laminating device located in the rear-end of the electrospinning apparatus; and
a step of thermosetting the first polyethylene terephthalte substrate, the high melting point and low melting point polyvinylidene fluoride nanofiber non-woven fabric, and the second polyethylene terephthalte substrate.

23. A method for manufacturing filter comprising nanofiber between substrates, by the electrospinning apparatus comprises 2 or more units, spinning solution main tank is independently connected and installed in nozzle of nozzle block located in each unit, a laminating device for bonding other fabrics is provided, and polymer spinning solution is spinned on a substrate located in a collector of each unit, comprising:

a step of injecting spinning solution which dissolved polyurethane and polyvinylidene fluoride in solvent to a supply device of each unit of the electrospinning apparatus;
a step of laminating-forming polyurethane and polyvinylidene fluoride nanofiber non-woven fabric by electrospinning the spinning solution on a first substrate in each of the unit;
a step of adhering upper side of a second substrate laminated on the polyurethane and polyvinylidene fluoride nanofiber non-woven fabric in a laminating device located in the rear-end of the electrospinning apparatus; and
a step of thermosetting the first substrate, the polyurethane and polyvinylidene fluoride nanofiber non-woven fabric, and the second substrate.

24. A method for manufacturing filter comprising nanofiber between substrates, by the electrospinning apparatus comprises 2 or more units, spinning solution main tank is independently connected and installed in nozzle of nozzle block located in each unit, a laminating device for bonding other fabrics is provided, and polymer spinning solution is spinned on a substrate located in a collector of each unit, comprising:

a step of injecting spinning solution which dissolved polyvinylidene fluoride in solvent to a supply device of each unit of the electrospinning apparatus;
a step of laminating-forming polyvinylidene fluoride nanofiber non-woven fabric by electrospinning the spinning solution on a first bicomponent substrate laminated on a first polyethylene terephthalate substrate in each of the unit;
a step of adhering upper side of a second bicomponent substrate laminated on a second polyethylene terephthalate substrate on the polyvinylidene fluoride nanofiber non-woven fabric in the laminating device located in the rear-end of the electrospinning apparatus; and

a step of thermosetting the polyvinylidene fluoride nanofiber non-woven fabric, the first and the second bicomponent substrates, and the first and the second polyethylene terephthalate substrates.

25. A method for manufacturing filter comprising nanofiber between substrates, by the electrospinning apparatus comprises 2 or more units, spinning solution main tank is independently connected and installed in nozzle of nozzle block located in each unit, a laminating device for bonding other fabrics is provided, and polymer spinning solution is spinned on a substrate located in a collector of each unit, comprising:

a step of injecting spinning solution which dissolved high melting point polyvinylidene fluoride and low melting point polyvinylidene fluoride in solvent to a supply device of each unit of the electrospinning apparatus;
a step of laminating-forming high melting point and low melting point polyvinylidene fluoride nanofiber non-woven fabric by electrospinning the spinning solution on a first bicomponent substrate laminated on a first polyethylene terephthalate substrate in each of the unit;
a step of adhering upper side of a second bicomponent substrate laminated on a second polyethylene terephthalate substrate on the high melting point and low melting point polyvinylidene fluoride nanofiber non-woven fabric in the laminating device located in the rear-end of the electrospinning apparatus; and
a step of thermosetting the high melting point and low melting point polyvinylidene fluoride nanofiber non-woven fabrics, the first and the second bicomponent substrates, and the first and the second polyethylene terephthalate substrates.

26. A method for manufacturing filter comprising nanofiber between substrates, by the electrospinning apparatus comprises 2 or more units, spinning solution main tank is independently connected and installed in nozzle of nozzle block located in each unit, a laminating device for bonding other fabrics is provided, and polymer spinning solution is spinned on a substrate located in a collector of each unit, comprising:

a step of injecting spinning solution which dissolved nylon in solvent to a supply device of each unit of the electrospinning apparatus;
a step of laminating-forming nylon nanofiber non-woven fabric by electrospinning the spinning solution on a first bicomponent substrate laminated on a first polyethylene terephthalate substrate in each of the unit;
a step of adhering upper side of a second bicomponent substrate laminated on a second polyethylene terephthalate substrate on the nylon nanofiber non-woven fabric in the laminating device located in the rear-end of the electrospinning apparatus; and
a step of thermosetting the nylon nanofiber non-woven fabric, the first and the second bicomponent substrates, and the first and the second polyethylene terephthalate substrates.

27. A method for manufacturing filter comprising nanofiber between substrates, by the electrospinning apparatus comprises 2 or more units, spinning solution main tank is independently connected and installed in nozzle of nozzle block located in each unit, a laminating device for bonding other fabrics is provided, and polymer spinning solution is spinned on a substrate located in a collector of each unit, comprising:

a step of injecting spinning solution which dissolved polyvinylidene fluoride in solvent to a supply device of each unit of the electrospinning apparatus;
a step of laminating-forming polyvinylidene fluoride nanofiber non-woven fabric by electrospinning the spinning solution on a second bicomponent substrate laminated on a first bicomponent substrate in each of the unit;
a step of adhering upper side of a third bicomponent substrate laminated on a fourth bicomponent substrate on the polyvinylidene fluoride nanofiber non-woven fabric in the laminating device located in the rear-end of the electrospinning apparatus; and
a step of thermosetting the polyvinylidene fluoride nanofiber non-woven fabric, the first , the second, the third, and the fourth bicomponent substrates.

28. A method for manufacturing filter comprising nanofiber between substrates, by the electrospinning apparatus comprises 2 or more units, spinning solution main tank is independently connected and installed in nozzle of nozzle block located in each unit, a laminating device for bonding other fabrics is provided, and polymer spinning solution is spinned on a substrate located in a collector of each unit, comprising:

a step of injecting spinning solution which dissolved polyvinylidene fluoride in solvent to a supply device of each unit of the electrospinning apparatus;
a step of laminating-forming a first polyvinylidene fluoride nanofiber non-woven fabric layer of fiber diameter of 150 to 250nm on a first substrate in a first unit of the electrospinning apparatus;

a step of laminating-forming a second polyvinylidene fluoride nanofiber non-woven fabric layer of fiber diameter of 100 to 150nm on the first polyvinylidene fluoride nanofiber non-woven fabric layer in a second unit of the electrospinning apparatus;

a step of laminating-forming a third polyvinylidene fluoride nanofiber non-woven fabric layer of fiber diameter of 150 to 250nm on the second polyvinylidene fluoride nanofiber non-woven fabric layer in a third unit of the electrospinning apparatus;

a step of adhering a second substrate on the third polyvinylidene fluoride nanofiber non-woven fabric in the laminating device located in the rear-end of the electrospinning apparatus; and

a step of thermosetting the first substrate, the first, the second, and the third polyvinylidene fluoride nanofiber non-woven fabrics, and the second substrate.

29. A method for manufacturing filter comprising nanofiber between substrates, by the electrospinning apparatus comprises 2 or more units, spinning solution main tank is independently connected and installed in nozzle of nozzle block located in each unit, a laminating device for bonding other fabrics is provided, and polymer spinning solution is spinned on a substrate located in a collector of each unit, comprising:

a step of injecting spinning solution which dissolved nylon in solvent to a first and a third units of the electrospinning apparatus and injecting spinning solution which dissolved polyvinylidene fluoride in solvent to a supply device of a second unit of the electrospinning apparatus;

a step of laminating-forming a first nylon nanofiber non-woven fabric layer of fiber diameter of 100 to 150nm on a first substrate in a first unit of the electrospinning apparatus;

a step of laminating-forming polyvinylidene fluoride nanofiber non-woven fabric layer of fiber diameter of 80 to 150nm on the first nylon nanofiber non-woven fabric layer in a second unit of the electrospinning apparatus;

a step of laminating-forming a second nylon nanofiber non-woven fabric layer with fiber diameter of 100 to 150nm on the polyvinylidene fluoride nanofiber non-woven fabric layer in a third unit of the electrospinning apparatus;

a step of adhering a second substrate on the second nylon nanofiber non-woven fabric in the laminating device located in the rear-end of the electrospinning apparatus; and

a step of thermosetting the first substrate, the first nylon nanofiber non-woven fabric, the polyvinylidene fluoride nanofiber non-woven fabric, the second nylon nanofiber non-woven fabric, and the second substrate.

30. A method for manufacturing filter comprising nanofiber between substrates, by the electrospinning apparatus comprises 2 or more units, spinning solution main tank is independently connected and installed in nozzle of nozzle block located in each unit, a laminating device for bonding other fabrics is provided, and polymer spinning solution is spinned on a substrate located in a collector of each unit, comprising:

a step of injecting spinning solution which dissolved polyurethane in solvent to a first and a third units of the electrospinning apparatus;

a step of injecting spinning solution which dissolved polyvinylidene fluoride in solvent to a supply device of a second unit of the electrospinning apparatus;

a step of laminating-forming a first polyurethane nanofiber non-woven fabric layer on a first substrate in a first unit of the electrospinning apparatus;

a step of laminating-forming polyvinylidene fluoride nanofiber non-woven fabric layer on the first polyurethane nanofiber non-woven fabric layer in a second unit of the electrospinning apparatus;

a step of laminating-forming a second polyurethane nanofiber non-woven fabric layer on the polyvinylidene fluoride nanofiber non-woven fabric layer in a third unit of the electrospinning apparatus;

a step of adhering upper side of a second substrate on the second polyurethane nanofiber non-woven fabric in the laminating device located in the rear-end of the electrospinning apparatus; and

a step of thermosetting the first substrate, the first polyurethane nanofiber non-woven fabric, the polyvinylidene fluoride nanofiber non-woven fabric, the second polyurethane nanofiber non-woven fabric, and the second substrate.

31. A method for manufacturing filter comprising nanofiber between substrates, by the electrospinning apparatus comprises 2 or more units, spinning solution main tank is independently connected and installed in nozzle of nozzle block located in each unit, a laminating device for bonding other fabrics is provided, and polymer spinning solution is spinned on a substrate located in a collector of each unit, comprising:

a step of injecting spinning solution which dissolved low melting point polyvinylidene fluoride in solvent to a first and a third units of the electrospinning apparatus and injecting spinning solution which dissolved high melting point polyvinylidene fluoride in solvent to a supply device of a second unit of the electrospinning apparatus;

a step of laminating-forming a first low melting point polyvinylidene fluoride nanofiber non-woven fabric layer of fiber diameter of 150 to 300nm on a first substrate in a first unit of the electrospinning apparatus;

a step of laminating-forming high melting point polyvinylidene fluoride nanofiber non-woven fabric layer of fiber diameter of 100 to 150nm on the first low melting point polyvinylidene fluoride nanofiber non-woven fabric layer in a second unit of the electrospinning apparatus;

a step of laminating-forming a second low melting point polyvinylidene fluoride nanofiber non-woven fabric layer of fiber diameter of 150 to 300nm on the high melting point polyvinylidene fluoride nanofiber non-woven fabric layer in a third unit of the electrospinning apparatus;

a step of adhering a second substrate on the second low melting point polyvinylidene fluoride nanofiber non-woven fabric in the laminating device located in the rear-end of the electrospinning apparatus; and

a step of thermosetting the first substrate, the first low melting point polyvinylidene fluoride nanofiber non-woven fabric, the high melting point polyvinylidene fluoride nanofiber non-woven fabric, the second low melting point polyvinylidene fluoride nanofiber non-woven fabric, and the second substrate.

FIG.1

FIG.2

FIG.3

FIG.4

FIG.5

FIG.6

FIG.7

FIG.8

FIG.9

2nd cellulose substrate
Polyvinylidene fluoride nanofiber non-woven fabric
1st cellulose substrate

FIG. 10

2nd bicomponent substrate

Polyvinylidene fluoride - hot melt nanofiber non-woven fabric

1st bicomponent substrate

FIG.11

2nd PET substrate

High melting point and low melting point polyvinylidene fluoride nanofiber non-woven fabric

1st PET substrate

FIG.12

2nd substrate
Polyurethane and polyvinylidene fluoride mixed nanofiber non-woven fabric
1st substrate

FIG.13

2nd PET substrate
2nd bicomponent substrate
Polyvinylidene fluoride nanofiber non-woven fabric
1st bicomponent substrate
1st PET substrate

FIG. 14

2nd PET substrate

2nd bicomponent substrate

High melting point and low melting point polyvinylidene fluoride nanofiber non-woven fabric

1st bicomponent substrate

1st PET substrate

FIG.15

2nd PET substrate
2nd bicomponent substrate
Nylon nanofiber non-woven fabric
1st bicomponent substrate
1st PET substrate

FIG.16

FIG.17

FIG.18

2nd substrate

3rd PVDF nanofiber non-woven fabric

2nd PVDF nanofiber non-woven fabric

1st PVDF nanofiber non-woven fabric

1st substrate

FIG.19

2nd substrate

2nd nylon nanofiber non-woven fabric

PVDF nanofiber non-woven fabric

1st nylon nanofiber non-woven fabric

1st substrate

FIG.20

2nd substrate
2nd polyurethane nanofiber non-woven fabric
Polyvinylidene fluoride non-woven fabric
1st polyurethane nanofiber non-woven fabric
1st substrate

FIG.21

2nd substrate

2nd low melting point PVDF nanofiber non-woven fabric

High melting point PVDF nanofiber non-woven fabric

1st low melting point PVDF nanofiber non-woven fabric

1st substrate

## INTERNATIONAL SEARCH REPORT

International application No.

**PCT/KR2014/001580**

### A. CLASSIFICATION OF SUBJECT MATTER

***D04H 1/559(2012.01)i, D04H 1/4374(2012.01)i, D04H 1/728(2012.01)i, B01D 39/08(2006.01)i***

According to International Patent Classification (IPC) or to both national classification and IPC

### B. FIELDS SEARCHED

Minimum documentation searched (classification system followed by classification symbols)

D04H 1/559; D04H 1/728; D01D 5/00; B82Y 40/00; A62B 18/02; D04H 1/542; A62B 23/02; B01D 39/16; C10L 1/10; C10L 1/18; B01D 69/02; B01D 39/14; B82Y 30/00; D04H 1/4374; B01D 39/08

Documentation searched other than minimum documentation to the extent that such documents are included in the fields searched
Korean Utility models and applications for Utility models: IPC as above
Japanese Utility models and applications for Utility models: IPC as above

Electronic data base consulted during the international search (name of data base and, where practicable, search terms used)

eKOMPASS (KIPO internal) & Keywords: nano fiber, substrate, filter, electro-spinning, cellulose, Polyvinylidene fluoride, thermal bonding, hotmelt, polyurethane, nylon, polyethlene terephthalate

### C. DOCUMENTS CONSIDERED TO BE RELEVANT

| Category* | Citation of document, with indication, where appropriate, of the relevant passages | Relevant to claim No. |
|---|---|---|
| X | US 2009-0032475 A1 (FERRER, I. et al.) 05 February 2009 See abstract, paragraphs [0001], [0011], [0013], [0082], [0084]-[0085], [0088] and claims 1, 12, 16-19, 28. | 1-15 |
| Y | | 20-27 |
| A | | 16-19,28-31 |
| X | KR 10-2013-0020661 A (CLARCOR INC.) 27 February 2013 See abstract, pages 8-13 and figures 11-12, 14. | 1-11,16-17 |
| Y | | 18-23,28-31 |
| Y | KR 10-2007-0047872 A (KIM, Hak Yong et al.) 08 May 2007 See abstract, claims 1, 3-4 and figure 1. | 18-31 |
| A | KR 10-2011-0046906 A (FINETEX ENE, INC.) 06 May 2011 See abstract, paragraphs [0007], [0020]-[0021], claims 1-3 and figure 1. | 1-31 |
| A | KR 10-2005-0024298 A (HOLLINGSWORTH & VOSE GMBH) 10 March 2005 See abstract and claims 1, 10, 12. | 1-31 |
| A | KR 10-2009-0077610 A (FINETEX TECHNOLOGY GLOBAL LIMITED) 15 July 2009 See abstract, claim 1 and figure 1. | 1-31 |

☐ Further documents are listed in the continuation of Box C.  ☒ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 07 JULY 2014 (07.07.2014) | **08 JULY 2014 (08.07.2014)** |

| Name and mailing address of the ISA/**KR** | Authorized officer |
|---|---|
| Korean Intellectual Property Office Government Complex-Daejeon, 189 Seonsa-ro, Daejeon 302-701, Republic of Korea Facsimile No. 82-42-472-7140 | Telephone No. |

Form PCT/ISA/210 (second sheet) (July 2009)

INTERNATIONAL SEARCH REPORT
Information on patent family members

International application No.

**PCT/KR2014/001580**

| Patent document cited in search report | Publication date | Patent family member | Publication date |
|---|---|---|---|
| US 2009-0032475 A1 | 05/02/2009 | EP 2183414 A2<br>WO 2009-018463 A2<br>WO 2009-018463 A3 | 12/05/2010<br>05/02/2009<br>04/06/2009 |
| KR 10-2013-0020661 A | 27/02/2013 | CA 2790415 A1<br>CA 2790425 A1<br>CA 2790581 A1<br>CA 2791312 A1<br>CN 102858439 A<br>CN 102858441 A<br>CN 102869433 A<br>CN 102946979 A<br>EP 2539053 A2<br>EP 2539054 A2<br>EP 2539055 A2<br>EP 2539056 A2<br>JP 2013-521105 A<br>JP 2013-521106 A<br>JP 2013-521107 A<br>KR 10-2013-0009793 A<br>KR 10-2013-0032302 A<br>WO 2011-106534 A2<br>WO 2011-106534 A3<br>WO 2011-106535 A2<br>WO 2011-106535 A3<br>WO 2011-106537 A2<br>WO 2011-106537 A3<br>WO 2011-106540 A2<br>WO 2011-106540 A3 | 01/09/2011<br>01/09/2011<br>01/09/2011<br>01/09/2011<br>02/01/2013<br>02/01/2013<br>09/01/2013<br>27/02/2013<br>02/01/2013<br>02/01/2013<br>02/01/2013<br>02/01/2013<br>10/06/2013<br>10/06/2013<br>10/06/2013<br>23/01/2013<br>01/04/2013<br>01/09/2011<br>19/01/2012<br>01/09/2011<br>02/02/2012<br>01/09/2011<br>12/01/2012<br>01/09/2011<br>12/01/2012 |
| KR 10-2007-0047872 A | 08/05/2007 | NONE | |
| KR 10-2011-0046906 A | 06/05/2011 | KR 10-1130788 B1 | 12/04/2012 |
| KR 10-2005-0024298 A | 10/03/2005 | AU 2003-273167 A1<br>CA 2487164 A1<br>EP 1366791 A1<br>EP 1366791 B1<br>JP 2005-527358 A<br>US 2005-0235619 A1<br>WO 03-099415 A1 | 12/12/2003<br>04/12/2003<br>03/12/2003<br>26/03/2008<br>15/09/2005<br>27/10/2005<br>04/12/2003 |
| KR 10-2009-0077610 A | 15/07/2009 | EP 1975284 A2<br>EP 1975284 A3<br>EP 1975284 B1<br>JP 2008-240231 A<br>JP 4833238 B2<br>KR 10-0787624 B1<br>KR 10-0843269 B1 | 01/10/2008<br>07/10/2009<br>08/05/2013<br>09/10/2008<br>07/12/2011<br>21/12/2007<br>02/07/2008 |

Form PCT/ISA/210 (patent family annex) (July 2009)

INTERNATIONAL SEARCH REPORT
Information on patent family members

International application No.

**PCT/KR2014/001580**

| Patent document cited in search report | Publication date | Patent family member | Publication date |
|---|---|---|---|
| | | US 2008-0241297 A1 | 02/10/2008 |
| | | US 7980838 B2 | 19/07/2011 |
| | | WO 2008-117944 A1 | 02/10/2008 |

Form PCT/ISA/210 (patent family annex) (July 2009)